# EUROPÄISCHE PATENTSCHRIFT

(11) **EP 2 953 113 B1**
(45) Veröffentlichungstag und Bekanntmachung des Hinweises auf die Patenterteilung: **14.06.2017**
(21) Anmeldenummer: 15001201.1
(22) Anmeldetag: 22.04.2015
(51) Int. Cl.: G08G 1/16, B60Q 1/52

(54) **VERFAHREN UND ANORDNUNG ZUR WARNUNG VON VERKEHRSTEILNEHMERN, DIE EIN STILLSTEHENDES FAHRZEUG PASSIEREN**
METHOD AND ASSEMBLY FOR WARNING ROAD USERS PASSING A STATIONARY VEHICLE
PROCÉDÉ ET SYSTÈME D'AVERTISSEMENT POUR UTILISATEURS D'UN TRAFIC ROUTIER PASSANT À CÔTÉ D'UN VÉHICULE IMMOBILE

(30) Priorität: 03.06.2014 DE 102014008283
(43) Veröffentlichungstag der Anmeldung: 09.12.2015
(73) Patentinhaber: MAN Truck & Bus AG, 80995 München (DE)
(72) Erfinder: Völl, Sebastian, 85221 Dachau (DE); Schwertberger, Walter, 82278 Althegnenberg (DE); Römersperger, Xaver, 84453 Mühldorf (DE); Dörner, Karlheinz, 85757 Karlsfeld (DE); Reule, Michael, 85354 Freising (DE); Kraus, Sven, 85748 Garching (DE)
(74) Vertreter: Liebl, Thomas

(56) Entgegenhaltungen:
- DE-U1-202012 006 346
- FR-A1- 2 916 399
- US-A1- 2013 223 686

## Beschreibung

Gegenstand der Erfindung ist ein Verfahren zur Warnung von Verkehrsteilnehmern, die ein stillstehendes Fahrzeug passieren, wobei das Fahrzeug wenigstens eine das Fahrzeugumfeld erfassende Sensoreinrichtung aufweist und die wenigstens eine Sensoreinrichtung zur Erfassung des Fahrzeugumfeldes zumindest einen Teilbereich des Verkehrsgeschehens im Fahrzeugaußenraum erfasst. Weiter gehört es zur Erfindung eine Anordnung zur Durchführung des Verfahrens anzugeben.

Fahrzeuge, insbesondere Nutzfahrzeuge wie Busse und Lastkraftwagen verdecken häufig, aufgrund ihrer Größe und Form, den Einblick in den fließenden Verkehr, wenn sie benachbart zu diesem anhalten oder abgestellt sind. Bewegen sich nun Verkehrsteilnehmer, zum Beispiel Fußgänger oder Radfahrer, in unmittelbarer Nachbarschaft des stehenden oder abgestellten Fahrzeugs auf den fließenden Verkehr zu, um beispielsweise eine Straße zu überqueren, sehen sie Fahrzeuge, die im fließenden Verkehr auf sie zu kommen, nicht und werden auch von diesen, bzw. von deren Fahrzeugführern nicht gesehen. Aufgrund dieses Umstandes kommt es immer wieder zu Unfällen, oft mit tödlichem Ausgang, weil Fahrzeuge nahezu ungebremst mit Fußgängern oder Radfahrern kollidieren.

Um Kollisionen von Verkehrsteilnehmern autonom zu verhindern oder deren Folgen abzumildern ist es aus der DE 69132189 T2 bekannt, Fahrzeuge mit entsprechenden Sensoren, Auswerteeinrichtungen und Steuereinrichtungen auszustatten, sodass bei einer drohenden Kollision Warnsignale abgegeben, sowie fahrerunabhängig autonome Ausweich- und/ oder Bremsmanöver durchgeführt werden können, diese technische Lösung setzt aber voraus, dass der Verkehrsteilnehmer mit dem eine Kollision droht, detektierbar ist. Bei hinter einem stehenden bzw. abgestellten Fahrzeug befindlichen, also für den Fahrzeugführer bzw. die Sensorik des sich nähernden Fahrzeugs verdeckten Verkehrsteilnehmern ist dies nicht der Fall. In solchen Situationen kommen Reaktionen des Fahrzeugführers, bzw. autonome Manöver des Fahrzeugs zu spät.

Zur Verbesserung der Einschätzung der Situation rund um ein Fahrzeug ist es weiter bekannt, Sensoreinrichtungen in Verbindung mit Auswerteeinrichtungen einzusetzen. So beschreibt die DE 102 27 221 A1 ein Verfahren, bei dem Innen- bzw. Außenraum eines Fahrzeugs mittels wenigstens einer Rundsichtkamera überwacht werden. Die erfassten Bilddaten werden sodann einer Transformation in zylindrische oder ebene Koordinaten unterzogen und mittels einer Bildauswertung auf besonders Interessante Bereiche hin analysiert, um diese automatisiert auszuwählen und einen zweiten Sensor darauf auszurichten. Es soll damit erreicht werden, dass der Innen- wie auch der Außenraum des Fahrzeugs wesentlich verlässlicher und sicherer erfasst werden, um eine wesentlich verlässlichere Basis für spezielle Fahrzeuganwendungen, von einer Warnfunktion, bis zu einem autonomen Bremsen, Beschleunigen oder Ausweichen des Fahrzeugs zu schaffen. Eine ähnliches Verfahren ist auch aus der DE 101 58 415 A1 bekannt.

Weiter ist es, wie beispielsweise in der DE 20 2011 005 102 U1 beschrieben, zur Erleichterung des Einparkens üblich, Rückfahrkameras einzusetzen. Diese befinden sich am Heck des Fahrzeugs und filmen die Umgebung hinter dem Wagen. Sie zeigen ihr Bild auf einem Display im Cockpit des Fahrzeugs an, dabei können verschiedenfarbige Hilfslinien im Display mit dargestellt werden, die zum Beispiel aus dem Lenkradeinschlag gewonnen werden und den durch diesen vorgegebenen Weg sichtbar machen. In Erweiterung solcher Rückfahrsysteme existieren sogenannte Bird's View-Systeme, die ein Bild aus der Vogelperspektive, also von oben auf das Fahrzeug, erzeugen. Hier werden neben einer Rückfahrkamera weitere Kameras an der Front und den Seiten des Fahrzeugs verwendet. Alle Bilder werden dabei digital entzerrt und auf einem Display dem Fahrzeugführer dargestellt.

Aus der DE 10 2007 000 449 A1 sind darüber hinaus Systeme bekannt, die in Bewegung befindliche Objekte vor bewegtem oder statischem Hintergrund erfassen und zählen. Hierzu wird ein durch Sensoren erfasster Bewegtbildstrom analysiert.

Außerdem ist ein gattungsgemäßes Verfahren aus der FR 2 916 399 A1 bekannt. Ausgehend von diesem Stand der Technik ist es Aufgabe der Erfindung, ein Verfahren anzugeben, das ein stillstehendes Fahrzeug passierende Verkehrsteilnehmer warnt, wenn diese sich dem fließenden Verkehr annähern und eine Gefährdungssituation droht.

Gelöst wird die Aufgabe durch die Merkmale des Hauptanspruchs, vorteilhafte Ausgestaltungen des Verfahrens sind in den abhängigen Ansprüchen gekennzeichnet. Eine Anordnung zur Durchführung des Verfahrens ist in Anspruch 16 gekennzeichnet, vorteilhafte Weiterbildungen in den auf diesen rückbezogenen Ansprüchen.

Zur Lösung der Aufgabe ist ein Verfahren vorgesehen, das in einem Fahrzeug bei dessen Stillstand ausgeführt wird und das Verkehrsteilnehmer, die das stillstehende Fahrzeug passieren, vor möglichen Gefahren durch andere, für sie nicht oder schlecht sichtbare Verkehrsteilnehmer warnt. Unter einem stillstehenden Fahrzeug ist sowohl ein in Betrieb befindliches stehendes Fahrzeug, als auch ein nicht in Betrieb befindliches abgestelltes Fahrzeug zu verstehen. Das Verfahren sieht wenigstens eine Sensoreinrichtung zur Erfassung des Fahrzeugumfeldes vor, die zumindest einen Teilbereich des Verkehrsgeschehens im Fahrzeugaußenraum erfasst. Die Sensoreinrichtung kann sich dazu unterschiedlicher physikalischer Prinzipien bedienen, wie sie heute zur Lösung anderer Aufgaben im Fahrzeug zur Verfügung stehen, bzw. bereits beschrieben wurden. Hierzu gehören beispielsweise Radar-, Lidar-, Ultraschall- und Bildabtasteinrichtungen. Der von der Sensoreinrichtung erfasste Teilbereich deckt seinerseits zumindest die dem fließenden Verkehr zugewandten Bereiche des Fahrzeugumfeldes als erste Unterbereiche, sowie die jeweils seitlich benachbarten dem fließenden Verkehr nicht zugewandten Bereiche als zweite und dritte Unterbereiche unterscheidbar ab. Dadurch ist es möglich, die ersten Bereiche als eigentlichen Gefahrenbereich und die zweiten und dritten Teilbereiche als die Bereiche zu klassifizieren, aus denen sich im Fahrzeugumfeld befindliche Personen oder andere Verkehrsteilnehmer dem Gefahrenbereich nähern können. Um diese Verkehrsteilnehmer vor drohenden Gefahren zu warnen ist vorgesehen, dass die wenigstens eine das Fahrzeugumfeld erfassende Sensoreinrichtung einen den relevanten Teil des Fahrzeugumfeldes repräsentierenden Datenstrom generiert und an eine Auswerteeinheit übergibt. Die Auswerteeinheit analysiert den Datenstrom auf bewegte Objekte hin und steuert bei Auftreten eines bewegten Objektes in den ersten Unterbereichen und dem gleichzeitigen Auftreten eines bewegten Objektes in den zweiten und/oder dritten Unterbereichen, eine Warneinrichtung an, derart, dass diese einen akustisch und/oder optisch, zumindest für die angesprochenen Verkehrsteilnehmer in den zweiten oder dritten Unterbereichen, zum Beispiel Fußgänger oder Radfahrer, wahrnehmbaren Warnhinweis abgibt. Bei den angesprochenen bewegten Objekten kann es sich um motorisierte oder nichtmotorisierte Verkehrsteilnehmer handeln oder um Tiere. Dabei treten in den ersten Unterbereichen üblicherweise motorisierte Verkehrsteilnehmer oder Radfahrer auf, in den zweiten und dritten Unterbereichen Fußgänger, Radfahrer oder Tiere.

Es ist an dieser Stelle darauf hinzuweisen, dass es einen oder auch zwei erste Unterbereiche und ebenso einen oder auch zwei zweite Unterbereiche bzw. einen oder auch zwei dritte Unterbereiche geben kann. Dies hängt davon ab, ob das stehende bzw. abgestellte Fahrzeug an einer Seite oder an zwei gegenüberliegenden Seiten von fließendem Verkehr umgeben ist. Steht das Fahrzeug schräg zum fließenden Verkehr, so sind zwar zwei Seiten dem fließenden Verkehr zugewandt, trotzdem ist nur ein zusammenhängender erster Unterbereich vorhanden.

Um zu verhindern, dass die bloße Anwesenheit eines Verkehrsteilnehmers, jeweils in den ersten Unterbereichen und in den zweiten und/ oder dritten Unterbereichen, zu einer Warnung führt, ist erfindungsgemäß vorgesehen, dass die Ansteuerung der Warneinrichtung durch die Auswerteeinheit nur dann erfolgt, wenn wenigstens ein bewegtes Objekt in den ersten Unterbereichen erkannt wurde und wenigstens eines der in den zweiten Unterbereichen und/oder dritten Unterbereichen erkannten bewegten Objekte sich auf die ersten Unterbereiche zu bewegt.

In vorteilhafter Weiterbildung kann vorgesehen sein, dass bei Vorhandensein von wenigstens einem bewegten Objekt in den ersten Unterbereichen und dem Vorhandensein von wenigstens einem bewegten Objekt in den zweiten Unterbereichen und/oder dritten Unterbereichen, die Auswerteeinheit die Kollisionswahrscheinlichkeit zwischen diesen bewegten Objekten berechnet und die Warneinrichtung ansteuert, wenn wenigstens ein vorgegebener erster Schwellwert für die Kollisionswahrscheinlichkeit überschritten wird. Auf diese Weise lässt sich die Abgabe eines Warnhinweises vorteilhaft auf tatsächlich akute Fälle einer Gefährdung eingrenzen.

Um eine die tatsächliche Gefährdung widerspiegelnde Warnung zu generieren, ist vorteilhaft vorgesehen, dass zur Berechnung der Kollisionswahrscheinlichkeit die Position, Bewegungsrichtung und Geschwindigkeit aller durch die Auswerteeinheit ermittelten bewegten Objekte ermittelt wird und die aktuelle Position, Bewegungsrichtung und Geschwindigkeit der bewegten Objekte in den ersten Bereichen, zu der jeweiligen aktuellen Position, Bewegungsrichtung und Geschwindigkeit aller bewegten Objekte in den zweiten und dritten Bereichen in Beziehung gesetzt wird.

Die Ansteuerung der Warneinrichtung mittels der Auswerteeinheit erfolgt in Weiterbildung des Verfahrens vorteilhaft so, dass das Warnsignal, akustisch und/oder optisch, eine ansteigende Intensität aufweist, wenn die Kollisionswahrscheinlichkeit nicht unter einen vorgegebenen Schwellwert fällt. Unter ansteigender Intensität soll dabei sowohl ein kontinuierlicher Intensitätsanstieg, als auch, besonders vorteilhaft, ein gestufter Anstieg der Intensität verstanden werden. Der Intensitätsanstieg kann dabei durch eine Erhöhung der Intensität des Signals selbst, zum Beispiel Lautstärke oder Helligkeit, als auch durch die Tonhöhe, bei akustischen Signalen oder die Lichtfarbe, bei optischen Signalen, erreicht werden. Weiter lässt sich eine Intensitätserhöhung durch die Anhebung der Pulsfolge bei gepulsten optischen oder akustischen Signalen erreichen.

Der Schwellwert für die Kollisionswahrscheinlichkeit und der Schwellwert für die Intensitätserhöhung des Warnsignals können in Abhängigkeit von der Position, Bewegungsrichtung und Geschwindigkeit der bewegten Objekte in den ersten Unterbereichen variiert werden, um bewegte Objekte in den zweiten und dritten Unterbereichen bei hoher Geschwindigkeit von Objekten in den ersten Unterbereichen vorteilhaft früher oder mit einer höheren Intensität zu warnen. Die Warnung erfolgt demnach situationsbezogen, indem der Zeitpunkt und die Intensität der akustischen und/oder optischen Warnung in Abhängigkeit von der Höhe der Kollisionswahrscheinlichkeit und/ oder von der Geschwindigkeit der bewegten Objekte im ersten Unterbereich dynamisch festgelegt werden.

Da in vielen der hier angesprochenen Situationen, in denen eine Warnung an die sich auf den fließenden Verkehr zu bewegenden Objekte (Verkehrsteilnehmer) generiert wird, diese für den fließenden Verkehr nicht sichtbar sind, weil sie durch das stehende Fahrzeug verdeckt werden, kann das Verfahren vorteilhaft dahingehend weitergebildet sein, dass zusätzlich zur Ansteuerung der Warneinrichtung für die bewegten Objekte in den zweiten und/ oder dritten Unterbereichen, die Auswerteeinheit eine zweite Warneinrichtung für die bewegten Objekte in den ersten Unterbereichen ansteuert. Die zweite Warneinrichtung gibt daraufhin ein Warnsignal an die bewegten Objekte in den ersten Unterbereichen ab. Eine derartige Vorgehensweise erlaubt es den Verkehrsteilnehmern im fließenden Verkehr zu reagieren, zum Beispiel auch dann, wenn sich ein Tier, unbeeindruckt durch das Warnsignal, weiter auf den fliesenden Verkehr zu bewegt.

Es kann dabei vorgesehen sein, dass die zweite Warneinrichtung ein durch die bewegten Objekte (Verkehrsteilnehmer) in den ersten Unterbereichen optisches und/ oder akustisches wahrnehmbares Signal abgibt. Von besonderem Vorteil ist eine solche Weiterbildung des Verfahrens indes, wenn eine geeignete Warneinrichtung zur Übertragung von Warnungen, zum Beispiel auf der Basis von Funk, zwischen dem stehenden Fahrzeug und bewegten Objekten (Fahrzeugen) in den ersten Unterbereichen vorgesehen ist. Vorausgesetzt ist hierbei, dass die bewegten Fahrzeuge in den ersten Unterbereichen mit einer entsprechenden Empfangs- und Warneinrichtung ausgestattet sind. Mit einer solchen Funkverbindung, also einer sogenannten Car-2-Car-Kommunikation, kann nicht nur ein Warnsignal an Fahrzeuge in den ersten Unterbereichen übertragen werden, es besteht vielmehr die Möglichkeit, Informationen über Position, Richtung und Geschwindigkeit der bewegten Objekte in den zweiten und/ oder dritten Unterbereichen zu übertragen. So besteht bei Kollisionsgefahr die Möglichkeit, dass die bewegten Fahrzeuge in den ersten Unterbereichen - eine entsprechende autonome Kollisionsvermeidungssteuerung vorausgesetzt - selbständig Fahrmanöver zur Kollisionsvermeidung, zum Beispiel eine autonome Notbremsung, einleiten können.

Zur Bestimmung der Art der Unterbereiche, also der Bestimmung, ob es sich um einen ersten Unterbereich oder um einen zweiten oder dritten Unterbereich handelt, kann die Auswerteeinheit vorteilhaft so ausgebildet sein, dass sie die ersten Unterbereiche mit dem fließenden Verkehr mittels einer Klassifizierungseinrichtung selbständig ermittelt. Hierzu kann die Klassifizierungseinrichtung unterschiedliche Informationen alleine oder in Kombination heranziehen. So lässt sich mittels einer Positionsinformation eines GPS-Systems in Verbindung mit einer elektronischen Landkarte beispielsweise bestimmen, ob das stehende Fahrzeug sich an einem Straßenrand befindet. Weiter besteht die Möglichkeit, mittels der Sensoreinrichtung die Geschwindigkeit, Bewegungsrichtung und Größe aller bewegten Objekte relativ zum Fahrzeug zu ermitteln, um aus deren Geschwindigkeit und/ oder Bewegungsbahn und/ oder Größe und/ oder Häufigkeit auf den oder die ersten Unterbereiche mit dem fließenden Verkehr zu schließen. Es ist an dieser Stelle darauf hinzuweisen, dass sowohl vorstehend, als auch nachfolgend, der Begriff fließender Verkehr ganz allgemein so zu verstehen ist, dass sich Fahrzeuge mit einer größeren Geschwindigkeit als Schrittgeschwindigkeit bewegen. Bei den Fahrzeugen muss es sich nicht zwingend um motorisierte Fahrzeuge handeln.

Die Klassifizierung der zweiten und dritten Unterbereiche kann ausgehend von identifizierten ersten Unterbereichen so erfolgen, dass jeweils zwischen einem ersten Unterbereich und einem zweiten Unterbereich, sowie einem ersten Unterbereich und einem dritten Unterbereich eine der vier Ecken des Fahrzeuggrundrisses liegt. Hierzu setzt die Auswerteeinheit die Bewegungsrichtung des fließenden Verkehrs zu dem gespeicherten Fahrzeuggrundriss in Beziehung. Bewegt sich der fließende Verkehr zum Beispiel entlang einer Fahrzeugseite (erster Unterbereich), sind die beiden von dieser Fahrzeugseite durch Ecken des Fahrzeuggrundrisses getrennten Seiten die zweiten und dritten Unterbereiche.

Alternativ kann vorgesehen sein, dass die Lage der ersten Unterbereiche und/ oder der zweiten und dritten Unterbereiche durch den Fahrzeugführer mittels Eingabemitteln in die Klassifizierungseinrichtung eingebbar ist. Hierbei können, bei Eingabe der Lage des ersten Unterbereichs oder der ersten Unterbereiche durch den Fahrzeugführer, der oder die zweiten Unterbereiche und der oder die dritten Unterbereiche, benachbart zu dem oder den ersten Unterbereichen, durch die Klassifizierungseinheit bestimmt werden. Dies geschieht dadurch, dass, wie vorstehend bereits beschrieben, die Klassifizierungseinheit die zweiten und dritten Unterbereiche so bestimmt, dass jeweils zwischen den ersten Unterbereichen und den zweiten Unterbereichen, sowie den ersten Unterbereichen und den dritten Unterbereichen, eine der vier Ecken des Fahrzeuggrundrisses liegt.

Eine zur Durchführung des vorstehend beschriebenen Verfahrens vorgesehene Anordnung weist vorteilhaft folgende Bestandteile auf:
- wenigstens eine Sensoreinrichtung, wobei die Sensoreinrichtung wenigstens einen ersten, einen zweiten und einen dritten Unterbereich des Fahrzeugumfeldes, bevorzugt aber das gesamte Fahrzeugumfeld erfasst und wobei die Sensoreinrichtung so ausgebildet ist, dass sie das Fahrzeugumfeld in einem Zeitraster wiederholend erfasst und als aufeinanderfolgende Dateninkremente in einem Datenstrom an die Auswerteeinheit (3) weiterleitet,
- eine Auswerteeinheit, die relativ zum Fahrzeug bewegte Objekte im Fahrzeugumfeld ermittelt und dazu so ausgebildet ist, dass sie aus den einzelnen das Fahrzeugumfeld zu aufeinanderfolgenden Zeitpunkten repräsentierenden Dateninkrementen bewegte Objekte, deren Bewegungsrichtung und Geschwindigkeit relativ zueinander feststellt und deren Kollisionswahrscheinlichkeit bestimmt,
- die Auswerteeinheit weiter so ausgebildet ist, dass sie, bei Überschreiten eines Schwellwertes für die Kollisionswahrscheinlichkeit, ein Ansteuersignal an eine Warneinrichtung ausgibt,
- die Warneinrichtung so ausgebildet ist, dass diese einen akustisch und/oder optisch zumindest für Fußgänger oder Radfahrer wahrnehmbaren Warnhinweis abgibt.

Von besonderem Vorteil ist es, wenn als Sensoreinrichtung eine Kameraeinrichtung mit Rundumsichteigenschaft verwendet wird. Die Auswerteeinheit ist dann vorteilhaft mit einer Bildanalyseeinrichtung ausgestattet, die sich bewegende Objekte aus dem Bildstrom ermittelt, indem Bildinhalte aufeinanderfolgender Bilder auf Veränderungen hin untersucht werden. Derartige Bildanalyseeinrichtungen sind bekannter Stand der Technik, so dass sich hier eine weitergehende Beschreibung erübrigt.

Als Warneinrichtung kommt vorteilhaft eine am Fahrzeug ohnehin vorhandene Schall oder Licht abstrahlende Einrichtung zum Einsatz, hierbei kann es sich zum Beispiel um eine Hupe, Scheinwerfer, Blinkleuchten oder Bremsleuchten handeln. Selbstverständlich kann es sich auch um eine eigens für diesen Zweck am Fahrzeug vorgesehene Einrichtung handeln, zum Beispiel einen Lautsprecher, der eine gesprochene Warnung ausgibt oder um eine Lichtprojektionseinrichtung, die einen Warnhinweis, zum Beispiel ein Stoppschild, auf den Boden projiziert.

Wie bereits oben erwähnt, ist es von Vorteil, eine zweite von der Auswerteeinheit ansteuerbare Warneinrichtung vorzusehen, die die Verkehrsteilnehmer in den ersten Unterbereichen vor einer drohenden Kollision warnt. Auch hier ist es denkbar, an dem stehenden Fahrzeug bereits für andere Zwecke verbaute Einrichtungen mit zu benutzen oder spezielle Warneinrichtungen vorzusehen. Von besonderem Vorteil ist es hier, eine in dem stehenden Fahrzeug vorhandene Fahrzeug zu Fahrzeug Kommunikationseinrichtung mit zu benutzen und über diese einen Warnhinweis und/ oder die Position, Richtung und Geschwindigkeit der bewegten Objekte in den zweiten und/ oder dritten Unterbereichen zu übertragen. Die damit verbundenen besonderen Vorteile sind oben bereits beschrieben. Fahrzeug-zu-Fahrzeug-Kommunikationseinrichtungen (Car-2-Car-Kommunikation) sind in der einschlägigen Literatur ausführlich beschrieben und damit Stand der Technik.

Es ist darauf hinzuweisen, dass die vorstehend und auch nachfolgend beschriebenen Steuerungs-, Analyse- oder Klassifizierungszwecken dienenden Einrichtung nicht zwangsläufig als Hardwarekomponenten ausgeführt sein müssen. Es ist vielmehr heute üblich, derartige Komponenten als Softwareroutinen auszubilden, die mittels Recheneinheiten ausgeführt werden. Heute übliche Fahrzeuge verfügen über eine Vielzahl solcher Recheneinheiten, die zur Datenübertragung miteinander vernetzt sind und unterschiedlichste Steuer-, Regel-, Analyse-, Klassifizierungs- und Datenübertragungsroutinen ausführen.

Einsetzbar ist das vorstehend beschriebene Verfahren, bzw. die vorstehend beschriebene Anordnung in Fahrzeugen, insbesondere Nutzfahrzeugen. Weitere Ausgestaltungen und Vorteile der Erfindung werden nachfolgend anhand der Zeichnungen näher erläutert, es zeigen:
- Fig. 1: Eine Prinzipdarstellung einer ersten Verkehrssituation aus der Vogelperspektive
- Fig. 2: Eine Prinzipdarstellung einer zweiten Verkehrssituation aus der Vogelperspektive

- Fig. 3: Prinzipdarstellung einer Anordnung zur Durchführung des Verfahrens

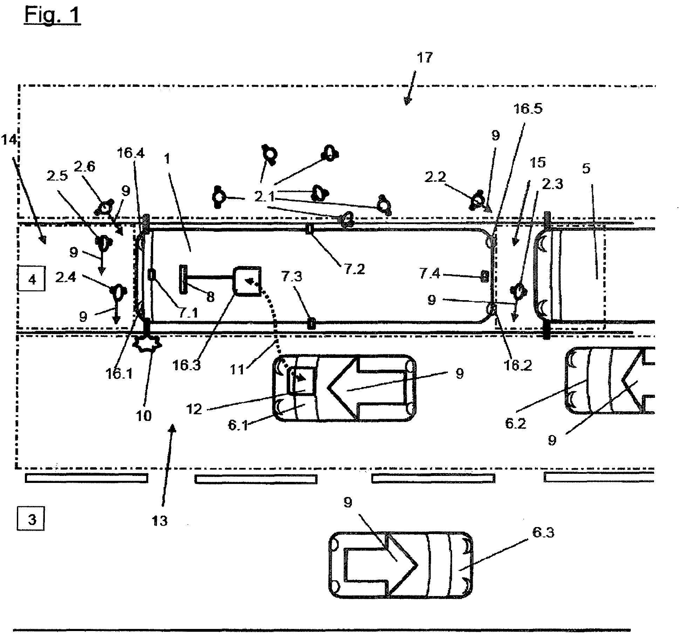

Um für die weitere Beschreibung eine Basis zu bilden, ist zunächst in Fig. 1 in einer Prinzipdarstellung der Grundriss eines Stadtbusses 1 gezeigt, der an einer durch Linien angedeuteten Haltebucht 4 am Rand einer befahrenen Straße 3 angehalten hat und in dessen Nähe sich eine Vielzahl von bewegten Objekten 2.1, 2.2, 2.3, 2.4, 2.5 und 2.6 befinden, die nachfolgend, zur besseren Veranschaulichung auch als Personen 1 bis 5 bezeichnet sind. Hinter dem Stadtbus 1 hat ein weiterer Bus 5 in der Haltebucht angehalten. Unmittelbar unterhalb des stehenden Stadtbusses 1 befindet sich in der Darstellung gemäß Fig. 1 die Straße 3, die von mehreren bewegten Objekten 6.1, 6.2 und 6.3, befahren ist, diese bewegten Objekte sind zur besseren Veranschaulichung nachfolgend auch als Personenkraftwagen 1 bis 3 bezeichnet sind. Der erste Personenkraftwagen 6.1 und der zweite Personenkraftwagen 6.2 bewegen sich in der Darstellung nach Fig. 1 von rechts nach links, also in die Richtung, die auch die Fahrtrichtung des nun stehenden Stadtbusses 1 ist. Auf der in der Darstellung unteren Gegenfahrbahn fährt ein dritter Personenkraftwagen 6.3 in die Gegenrichtung. Der Stadtbus 1 ist mit einem Frontsensor 7.1, einem rechten Seitensensor 7.2, einem linken Seitensensor 7.3 und einem Hecksensor 7.4 ausgestattet, wobei diese Sensoren 7.1 bis 7.4 das gesamte unmittelbare Umfeld des Stadtbusses 1 erfassen und mit einer Auswerteeinheit 8 verbunden sind (die Verbindungen sind in Fig. 1 nicht dargestellt). Um die Bewegungsverhältnisse in der Darstellung gemäß Fig. 1 zu veranschaulichen, sind die in Bewegung befindlichen Objekte, also die Personen 2.2, 2.3, 2.4, 2.5, und 2.6 und Personenkraftwagen 6.1, 6.2 und 6.3, mit Richtungspfeilen 9 versehen, die Bewegungsrichtung und Geschwindigkeit symbolisieren.

Im Folgenden soll nun, unter Zugrundelegung der vorstehend geschilderten Situation, die Wirkungsweise des erfindungsgemäßen Verfahrens erläutert werden. Dazu ist angenommen, dass der Stadtbus 1 die Haltebucht 4 angesteuert hat und sich im Stillstand befindet. Zur Aktivierung des Verfahrens hat der Fahrzeugführer, durch Eingabemittel (nicht dargestellt), die in Fahrtrichtung des Stadtbusses 1 gesehen linke Fahrzeugseite als dem fließenden Verkehr zugewandt definiert und die Auswerteeinheit 8 damit in die Lage gesetzt, den von dem linken Seitensensor 7.3 erfassten Bereich als ersten Unterbereich 13 festzulegen und, benachbart zu diesem, einen zweiten Unterbereich 14, der durch den Frontsensor 7.1 erfasst wird und einen dritten Unterbereich 15, der durch den Hecksensor 7.4 erfasst wird, zu definieren. Als Definitionskriterium gilt dabei, dass der zweite und der dritte Unterbereich 14, 15 zum ersten Unterbereich 13 benachbart und durch eine Fahrzeugecke im Fahrzeuggrundriss von diesem getrennt sind. Die Festlegung des zweiten und dritten Unterbereiches 14, 15 erfolgt demnach dadurch, dass die Auswerteeinheit 8 den gespeicherten Fahrzeuggrundriss des Stadtbusses 1 und die Lage des ersten Unterbereiches 13 relativ zum Stadtbus 1 zueinander in Beziehung setzt. Nach Festlegung der Unterbereiche 13, 14, 15, die in der Fig. 1 durch jeweils eine Strich-Punkt Umrandung angedeutet sind, kann die Auswerteeinheit 8, jeweils aus den von den Sensoren (linker Seitensensor 7.3, Frontsensor 7.1 und Hecksensor 7.4) empfangenen Datenströmen, bewegte Objekte identifizieren und ihre jeweilige Position, Bewegungsrichtung und gegebenenfalls ihre Geschwindigkeit relativ zum stillstehenden Stadtbus 1 ermitteln. Die Datenströme beinhalten dazu jeweils eine zeitliche Abfolge von "Momentaufnahmen" des jeweils detektierten Szenarios. Sind die vorstehend angesprochenen Informationen ermittelt, setzt die Auswerteeinheit 8 die Position, Bewegungsrichtung und Geschwindigkeit aller bewegten Objekte in dem zweiten und dritten Unterbereich 14, 15 zu den bewegten Objekten im ersten Unterbereich 13 in Beziehung. In der Darstellung nach Fig. 1 sind dies im dritten Unterbereich 15, die dritte Person 2.3 und im zweiten Unterbereich 14 die vierte Person 2.4 und die fünfte Person 2.5. Diese werden in Beziehung gesetzt zu den Bewegungsattributen (Position, Richtung Geschwindigkeit) des ersten Personenkraftwagens 6.1 und des zweiten Personenkraftwagens 6.2 in dem ersten Unterbereich 13. Unter in Beziehung setzen wird dabei verstanden, dass in einer Simulationsrechnung ermittelt wird, mit welcher Wahrscheinlichkeit es zu einer Kollision der Personen 2.3, 2.4, 2.5 mit den Personenkraftwagen 6.2 und 6.1 kommen kann.

Im Beispiel nach Fig. 1 ist die Kollisionswahrscheinlichkeit zwischen der dritten Person 2.3 und dem ersten Personenkraftwagen 6.1 gleich Null, weil sich die Bewegungsrichtungen nicht überschneiden. Die Kollisionswahrscheinlichkeit zwischen der dritten Person 2.3 und dem zweiten Personenkraftwagen 6.2 ist dagegen ungleich Null, weil sich die Bewegungsrichtungen überschneiden. Entsprechendes gilt für die vierte Person 2.4 und die fünfte Person 2.5 hinsichtlich des ersten Personenkraftwagens 6.1, auch hier überschneiden sich die Bewegungsrichtungen. In den Fällen, in denen es zu einer Kollision kommen kann, wird dabei durch die Auswerteeinheit 8, unter Betrachtung der Wegstrecke, die die bewegten Objekte (Personen und Fahrzeuge) in Richtung auf den möglichen Kollisionsbereich (Überschneidung der Bewegungsrichtungen) unter Berücksichtigung eines maximal möglichen Geschwindigkeitszuwachses noch zurücklegen können, eine Kollisionswahrscheinlichkeit ermittelt und mit einem Schwellwert verglichen. Bei einer Überschreitung des Schwellwertes wird ein Warnsignal ausgelöst, indem die Auswerteeinheit 8 eine Warneinrichtung 16.1, 16.2. 16.3 ansteuert.

In Vereinfachung des oben geschilderten Verfahrens kann natürlich vorgesehen sein, auf die Berechnung der Kollisionswahrscheinlichkeit zu verzichten und statt dessen bereits ein Warnsignal auszulösen, wenn der erste Unterbereich 13 von Fahrzeugen befahren wird und sich bewegte Objekte (im Beispiel Personen 2.3, 2.4, 2.5) in dem zweiten Unterbereich 14 oder dem dritten Unterbereich 15 befinden.

Wie weiter oben ausgeführt, kann die Warneinrichtung ganz unterschiedlich ausgeführt sein. Im Beispiel nach Fig. 1 sind unterschiedliche Warneinrichtungen vorgesehen, bei der ersten Warneinrichtung 16.1 handelt es sich um den in Fahrtrichtung des Stadtbusses 1 gesehen linken vorderen Scheinwerfer. Dieser wird aktiviert wenn die Auswerteeinheit 8 feststellt, dass die Kollisionswahrscheinlichkeit der vierten Person 2.4 und/ oder der fünften Person 2.5 mit dem ersten Fahrzeug 6.1 den gespeicherten Schwellwert überschreitet. Die Aktivierung kann dabei so erfolgen, dass die Auswerteinheit 8 den Scheinwerfer impulsförmig ansteuert, so dass dieser ein Blinksignal abgibt.

In der vereinfachten Version des Verfahrens, würde das Warnsignal durch Ansteuerung der zweiten Warneinrichtung 16.1 mittels der Auswerteeinheit 8 bereits aktiviert werden, wenn Fahrzeuge 6.1, 6.2 in dem ersten Unterbereich 13 und gleichzeitig bewegte Objekte in dem zweiten Unterbereich 14 durch die Auswerteeinheit 8 festgestellt würden.

Wie vorstehend geschildert, verhält es sich analog auch mit dem Auslösen der dritten Warneinrichtung 16.2, die im gewählten Beispiel durch das in Fahrtrichtung des Stadtbusses gesehen linke hintere Blinklicht gebildet ist. Übersteigt die Kollisionswahrscheinlichkeit des zweiten Fahrzeugs 6.2 mit der dritten Person 2.3 den Schwellwert, steuert die Auswerteeinheit 8 die zweite Warneinrichtung 16.2 impulsförmig an, so dass diese ein Blinksignal abgibt.

Bezüglich der vereinfachten Form des Verfahrens würde auch hier, durch Ansteuerung der zweiten Warneinrichtung 16.2 mittels der Auswerteeinheit 8, das Warnsignal bereits aktiviert werden, wenn Fahrzeuge 6.1, 6.2 in dem ersten Unterbereich 13 und gleichzeitig bewegte Objekte in dem dritten Unterbereich 15 durch die Auswerteeinheit 8 festgestellt würden.

Zur Warnung der Verkehrsteilnehmer in dem ersten Unterbereich 13 ist im Beispiel nach Fig. 1 vorgesehen, dass die Auswerteeinheit 8 eine dritte Warneinrichtung 16.3 ansteuert, die ihrerseits über ein Warnblinklicht 10 verfügt, das für die Fahrzeuge in dem ersten Unterbereich deutlich sichtbar, im Bereich des in Fahrtrichtung des Stadtbusses 1 gesehen linken Außenspiegels angebracht ist. Die Verbindung zwischen der dritten Warneinrichtung 16.3 und dem Warnblinklicht 10 ist aus Gründen der Übersichtlichkeit in Fig. 1 nicht eingezeichnet. Im Falle einer drohenden Kollision zwischen den bewegten Objekten in dem ersten Unterbereich 13, mit bewegten Objekten die sich, aus dem zweiten Unterbereich 14 und/ oder dem dritten Unterbereich 15 kommend, dem ersten Unterbereich 13 annähern, aktiviert die Auswerteeinheit 8 über die dritte Warneinrichtung 16.3 das Warnblinklicht 10. Selbstverständlich besteht auch die Möglichkeit, im Heckbereich des Stadtbusses 1 ein weiteres Blinklicht (nicht dargestellt) anzubringen, um die Sicherheit weiter zu erhöhen.

Neben der vorstehend beschriebenen Fähigkeit der dritten Warneinrichtung 16.3, bei drohender Kollision ein Blinklicht anzusteuern, besitzt diese eine Einrichtung zur Fahrzeug-zu-fahrzeug-Kommunikation (Car-2-Car-Kommunikation). Über diese Kommunikationseinrichtung übermittelt die dritte Warneinrichtung 16.3 per Funksignal von der Auswerteeinheit 8 generierte Informationen, wie zum Beispiel ein Warnsignal und/ oder Informationen über die Position, Bewegungsrichtung und Geschwindigkeit der bewegten Objekte in den zweiten und/ oder dritten Unterbereichen. Ist ein Fahrzeug im ersten Unterbereich 13 mit einer entsprechenden Empfangs- und Verarbeitungseinrichtung ausgestattet, können die entsprechenden Informationen empfangen, verarbeitet und in Ansteuersignale umgesetzt werden. Im Beispiel nach Fig. 1 ist das erste Fahrzeug 6.1 mit einer entsprechenden Empfangs- und Verarbeitungseinrichtung 12 ausgestattet. Empfängt das erste Fahrzeug 6.1 eine entsprechende Information, zum Beispiel über eine in Fig. 1 durch einen gepunkteten Doppelpfeil angedeutete Funkverbindung 11, setzt diese die empfangene Information in ein Warnsignal und, falls in dem ersten Fahrzeug 6.1 ein Antikollisionssystem mit einem autonomen Bremsassistenten vorhanden ist, in ein Notbremssignal um. Antikollisionssysteme sind, wie eingangs erwähnt, bereits bekannt, so dass sich eine ausführliche Beschreibung eines solchen Systems erübrigt, zumal es nicht zur eigentlichen Erfindung gehört. Hinsichtlich der vom Stadtbus 1 an das erste Fahrzeug 6.1 übermittelten Information ist lediglich darauf hinzuweisen, dass sie, neben dem Warnhinweis, Daten über Position, Bewegungsrichtung und Geschwindigkeit der bewegten Objekte (vierte Person 2.4 und fünfte Person 2.5 in Fig. 1), die sich auf Kollisionskurs zum ersten Fahrzeug 6.1 befinden, enthalten. Die Position, Bewegungsrichtung und Geschwindigkeit kann dabei als globale Information in Bezug auf eine virtuelle Landkarte oder als relative Position zum Stadtbus 1 oder zum ersten Fahrzeug 6.1 aufbereitet sein. Abhängig von der Art der Aufbereitung, ist die Einbindung in die Steuerungsabläufe in dem ersten Fahrzeug 6.1 unterschiedlich.

Wie bereits erwähnt, verfügt der Stadtbus 1 über Sensoren 7.1 bis 7.4, die es erlauben, das gesamte Umfeld des Stadtbusses zu detektieren. Somit ist auch ein vierter Unterbereich 17 durch die Auswerteeinheit 8 auswertbar, der in Fahrtrichtung des Stadtbusses 1 gesehen auf dessen rechter, dem fließenden Verkehr abgewandten Seite liegt. Hier befinden sich ebenfalls Objekte, nämlich die ersten Personen 2.1, die hinsichtlich einer Kollisionsbetrachtung keine Rolle spielen und eine zweite Person 2.2, die sich im Heckbereich des Stadtbusses 1 auf den dritten Unterbereich 15 zu bewegt und eine sechste Person 2.6, die sich im Frontbereich des Stadtbusses 1 auf den zweiten Unterbereich 14 zu bewegt. Es ist nun denkbar, bereits bei dieser Annäherung durch die Auswerteeinheit 8 Warnsignale auszulösen. Im dargestellten Fall nach Fig. 1 würde die Auswerteeinheit 8, wegen der Annäherung der sechsten Person 2.6, bzw. der zweiten Person 2.2, zum Beispiel als vierte Warneinrichtung 16.4 den rechten vorderen Scheinwerfer und als fünfte Warneinrichtung 16.5 die rechte hintere Blinkleuchte des Stadtbusses 1 gepulst ansteuern, so dass diese ein Blinksignal abgeben.

Die im Beispiel nach Fig. 1 angesprochenen, durch die Warneinrichtungen 16.1 bis 16.5 abgegebenen Blinksignale können natürlich ergänzend mit akustischen Signalen aus weiteren nicht dargestellten Warneinrichtungen gekoppelt sein. Weiter ist es denkbar, diese Kopplung zuschaltbar zu gestalten. Besonders vorteilhaft wäre beispielsweise eine von der Tageszeit abhängige automatische Zuschaltung, wobei, zum Beispiel in den Nachtstunden, nur die optische Warnung aktiv ist, um Anwohner nicht zu stören. Natürlich könnte auch die optische Signalgabe manuell oder automatisch abschaltbar gestaltet sein.

Das vorstehend in Verbindung mit einem Stadtbus beschriebene Verfahren, wobei dieser eine Haltebucht angefahren hat, also in Betrieb ist, kann natürlich bei jeder Art von stehenden oder abgestellten Fahrzeugen zur Anwendung kommen, die sich im öffentlichen Verkehrsraum befinden und zwar unabhängig davon, ob sie in Betrieb sind oder nicht. Im letztgenannten Fall sind lediglich beim Abstellen des Fahrzeugs die Sensoren, die Auswerteeinheit und die Warneinrichtungen in Betrieb bzw. betriebsfähig zu halten. Mit anderen Worten, das vorstehend in Verbindung mit Fig. 1 beschriebene Verfahren würde genau so ablaufen, wenn Fahrer und Fahrgäste den Stadtbus verlassen hätten und dieser in der Haltebucht 4 oder an einem Straßenrand abgestellt wäre.

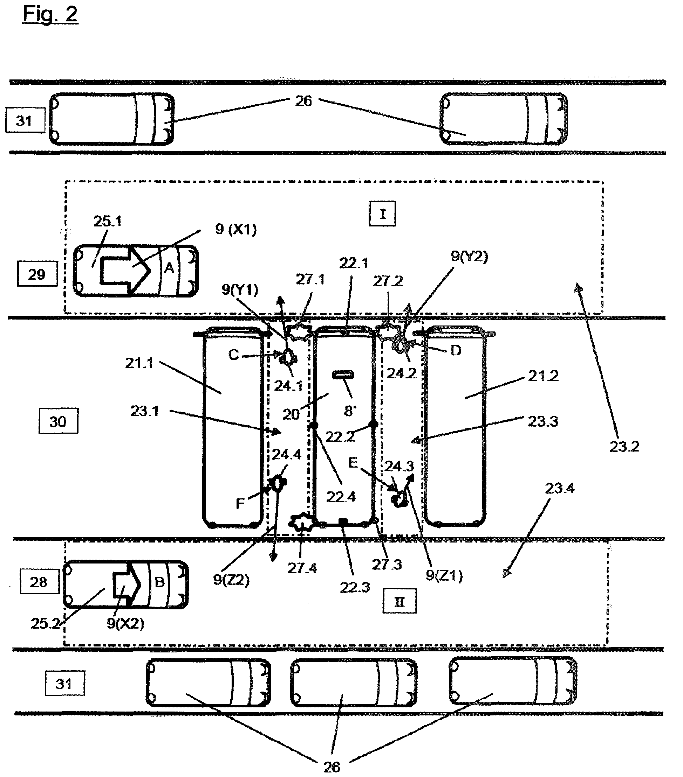

Eine zweite aus der Vogelperspektive gesehene Verkehrssituation ist in Fig. 2 dargestellt. Hier handelt es sich um eine Parksituation, wie sie für Autobahnparkplätze typisch ist. Für Nutzfahrzeuge, zum Beispiel Lastkraftwagen oder Reisebusse, ist ein mittlerer Parkstreifen 30 vorgesehen, den die Nutzfahrzeuge von einer ersten Fahrstraße 28 aus anfahren und über eine zweite Fahrstraße 29 verlassen können. Die vorgeschriebene Fahrtrichtung für die Fahrstraßen 28, 29 ist also in beiden Fällen in der Darstellung nach Fig. 2 von links nach rechts. Auf dem Parkstreifen 30 befinden sich ein Reisebus 20, mit seiner Front auf die zweite Fahrstraße 29 zu weisend. Benachbart zu diesem sind auf seiner linken Seite ein erstes Nutzfahrzeug 21.1 und auf seiner rechten Seite ein zweites Nutzfahrzeug 21.2 abgestellt. Auf den Fahrstraßen 28, 29 nähern sich bewegte Objekte 25.1, 25.2, die nachfolgend aus Gründen der Veranschaulichung auch als Kraftwagen 1 und 2 bezeichnet sind, dem Reisebus 20. Im Einzelnen nähert sich auf der ersten Fahrstraße 28 ein zweiter Kraftwagen 25.2 dem Heck des Reisebusses 20 und auf der zweiten Fahrstraße 29 ein erster Kraftwagen 25.1 dem Bug des Reisebusses 20. Auf den dem Parkstreifen 30 abgewandten Seiten der Fahrstraßen 28, 29 sind Parkbuchten 31 vorgesehen, auf denen weitere Kraftwagen 26 parken. Rund um den Reisebus halten sich bewegte Objekte 24.1 - 24.4 auf, die im Folgenden zur besseren Veranschaulichung auch als Reisende 1 bis 4 bezeichnet sind. Die Bewegungen der in Fig. 2 dargestellten bewegten Objekte (Kraftwagen 25.1, 25.2 und Reisende 24.1 -24.4) ist auch hier mit Bewegungspfeilen 9 angedeutet, denen Bewegungsrichtungen X1, X2, Y1, Y2, Z1, Z2 zugeordnet sind.

Bei dieser vorstehend geschilderten Verkehrssituation gibt es jeweils zwei erste Unterbereiche I und II 23.2, 23.4, jeweils an der Front (erster Unterbereich I 23.2) und am Heck (zweiter Unterbereich II 23.4) des Reisebusses 20 und, benachbart zu diesen, einen zweiten Unterbereich 23.1 und einen dritten Unterbereich 23.3, wobei der zweite Unterbereich und der dritte Unterbereich strenggenommen jeweils zweimal, wechselseitig aber deckungsgleich vorhanden sind, so dass im Folgenden zur Vereinfachung nur von einem zweiten Unterbereich 2.1 und einem dritten Unterbereich 23.3 gesprochen wird.

Zur Erfassung des Geschehens in den Unterbereichen 23.1 bis 23.4 sind eine Frontkamera 22.1, eine rechte Seitenkamera 22.2, eine Heckkamera 22.3 und eine linke Seitenkamera 22.4 vorgesehen, die jeweils mit einer Auswerteeinrichtung 8' verbunden sind. Die Verbindungen sind nicht dargestellt. Die Auswerteeinheit 8' analysiert die von den Kameras 22.1 bis 22.4 in Form von Einzelbilderfolgen eingehenden Daten auf Veränderungen hin, werden solche Veränderungen festgestellt, schließt die Auswerteeinheit 8' auf ein bewegtes Objekt und ordnet diesem bewegten Objekt, unter Berücksichtigung des Zeitrasters, in dem die Einzelbilder einer Einzelbildfolge bei der Auswerteeinheit 8' eingehen, Attribute wie Position, Bewegungsrichtung und Geschwindigkeit zu. Die Bezugsgröße ist dabei der in Ruhe befindliche Reisebus 20.

Zur Abgabe von Warnsignalen sind auch hier eine erste Warneinrichtung 27.1 vorne links, eine zweite Warneinrichtung 27.2 vorne rechts, eine dritte Warneinrichtung 27.3 hinten rechts und eine vierte Warneinrichtung 27.4 hinten links am Reisebus 1 angeordnet und mit der Auswerteeinheit 8' ansteuertechnisch verbunden (die Verbindungen sind in Fig. 2 nicht dargestellt).

Das vorher Gesagte unterstellt und weiter unterstellt, dass mit Hilfe von Eingabemitteln (in Fig. 2 nicht dargestellt) die beiden ersten Unterbereiche (I und II) 23.2, 23.4 durch den Fahrzeugführer des Reisebusses 20 als fließender Verkehr definiert wurden, wird die Auswerteeinheit 8', durch die Analyse der von den Kameras 22.1 bis 22.4 eingehenden Einzelbildfolgen, beispielsweise folgendes ermitteln:
- Ein erstes Objekt (erster Kraftwagen 25.1) befindet sich an Punkt A und nähert sich im ersten Unterbereich I 23.2 mit Bewegungsrichtung X1.
- Ein zweites Objekt (zweiter Kraftwagen 25.2) befindet sich an Punkt B und nähert sich im ersten Unterbereich II 23.4 mit Bewegungsrichtung X2.
- Ein drittes Objekt (erster Reisender 24.1) befindet sich an Punkt C und nähert sich im zweiten Unterbereich 23.1 dem ersten Unterbereich I 23.2 mit Bewegungsrichtung Y1.
- Ein viertes Objekt (zweiter Reisender 24.2) befindet sich an Punkt D und nähert sich im dritten Unterbereich 23.3 dem ersten Unterbereich I 23.2 mit Bewegungsrichtung Y2.
- Ein fünftes Objekt (dritter Reisender 24.3) befindet sich an Punkt E und entfernt sich im dritten Unterbereich 23.3 vom ersten Unterbereich II 23.4 mit Bewegungsrichtung Z1.
- Ein sechstes Objekt (vierter Reisender 24.4) befindet sich an Punkt F und nähert sich im zweiten Unterbereich 23.1 dem ersten Unterbereich II 23.4 mit Bewegungsrichtung Z2.

Ausgehend von diesen ermittelten Sachverhalten analysiert die Auswerteeinheit 8' die Bewegungsrichtungen der bewegten Objekte in den ersten Unterbereichen (I und II) 23.2, 23.4 daraufhin, ob sich diese mit den Bewegungsrichtungen der bewegten Objekte in dem zweiten Unterbereich 23.1 und/ oder dritten Unterbereich 23.3 schneiden wie folgt:
- Schneidet sich Bewegungsrichtung X1 mit Y1 -> ja, vorne links -> Kollisionsgefahr
- Schneidet sich Bewegungsrichtung X1 mit Y2 -> ja, vorne rechts -> Kollisionsgefahr
- Schneidet sich Bewegungsrichtung X2 mit Z1 -> nein -> keine Kollisionsgefahr
- Schneidet sich Bewegungsrichtung X2 mit Z2 -> ja, hinten links -> Kollisionsgefahr In einer einfachen Version des erfindungsgemäßen Verfahrens kann die Feststellung der Überschneidung der Bewegungsrichtungen genügen, um eine Kollisionsgefahr anzunehmen und die Signalgeber durch Ansteuerung der Warneinrichtungen 27.1, 27.2, 27,4 mittels der Auswerteeinheit 8' zu veranlassen. So würde im Beispiel nach Fig. 2 die Ansteuereinheit 8' die am Reisebus 20 angeordnete erste Warneinrichtung 27.1 vorne links, die zweite Warneinrichtung 27.2 vorne rechts und die vierte Warneinrichtung 27.4 hinten links, ansteuern, wobei diese ein optisches und/oder akustisches Signal abgeben. Die dritte Warneinrichtung 27.3 hinten rechts würde mangels Kollisionsgefahr nicht angesteuert.

Natürlich besteht, wie bereits in Verbindung mit dem Beispiel nach Fig. 1 beschrieben, auch hier die Möglichkeit, die Kollisionswahrscheinlichkeit durch eine Betrachtung der Position, Bewegungsrichtung und Geschwindigkeit der einzelnen bewegten Objekte genauer zu ermitteln und mit einem Schwellwert, der in der Ansteuereinheit 8' vorgehalten ist, zu vergleichen und erst bei Überschreiten dieses Schwellwertes die Ansteuerung der Warneinrichtungen zu veranlassen.

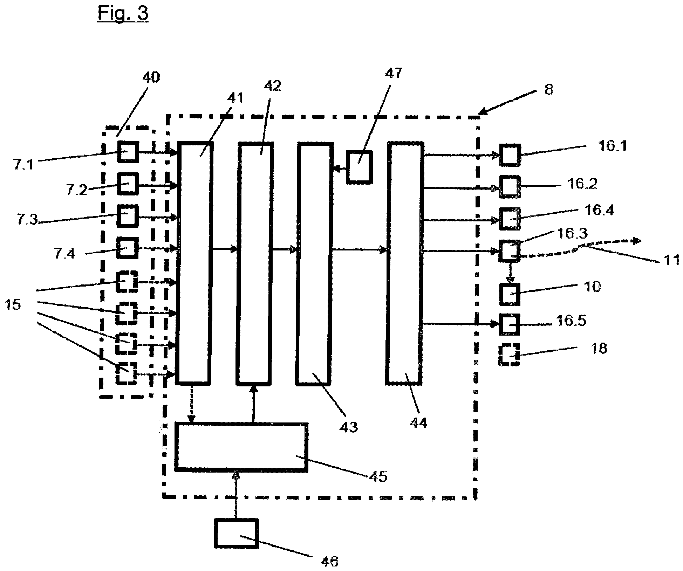

Eine Anordnung zur Durchführung des vorstehend beschriebenen Verfahrens ist beispielhaft in Fig. 3 dargestellt. Zum besseren Verständnis wird Bezug genommen auf die Darstellung in Fig. 1 und die zugehörige vorstehende Beschreibung. Hinsichtlich der Funktionseinheiten, die auch in Fig. 1 abgebildet sind, wurden die Bezugszeichen übernommen. Die nachfolgend näher beschriebenen Funktionseinheiten müssen, soweit sie Teil der Analyseeinheit 8 sind, nicht zwangsläufig als Hardwarekomponenten ausgeführt sein. Es ist vielmehr heute üblich, derartige Komponenten als Softwareroutinen auszubilden, die mittels Recheneinheiten ausgeführt werden. Heute übliche Fahrzeuge verfügen über eine Vielzahl solcher Recheneinheiten, die zur Datenübertragung miteinander vernetzt sind und unterschiedlichste Steuer-, Regel-, Analyse-, Klassifizierungs- und Datenübertragungsroutinen ausführen. Für Sensoren und Warneinrichtungen gilt, dass diese nicht ausschließlich für den vorstehend beschriebenen Zweck vorhanden sein müssen, es ist vielmehr heute üblich, aus Kostengründen weitestgehend auf bereits in Fahrzeug vorhandene Einrichtungen zurückzugreifen.

Wie in Fig. 3 gezeigt, besteht eine Anordnung zur Durchführung des Verfahrens im Wesentlichen aus einer Sensoreinrichtung 40, einer Auswerteeinheit 8, einer Mehrzahl von Warneinrichtungen 16.1 bis 16.5, 10, 18 und gegebenenfalls einer Eingabeeinrichtung 46, die sämtlich in einem Fahrzeug verbaut sind. Die Sensoreinrichtung 40 detektiert dabei die Fahrzeugumgebung in einem Zeitraster und leitet die gewonnenen Daten der Auswerteeinheit 8 zu, die eingehende Umgebungsdaten analysiert und in Abhängigkeit vom Analyseergebnis Warneinrichtungen 16.1 bis 16.5, 10, 18 ansteuert. Die Warneinrichtungen ihrerseits geben bei Ansteuerung spezifische Warnsignale ab.

Die vorstehend angesprochene Sensoreinrichtung 40 weist, wie bereits in Verbindung mit Fig. 1 beschrieben, einen Frontsensor 7.1, einen rechten Seitensensor 7.2, einen linken Seitensensor 7.3 und einen Hecksensor 7.4, auf. Darüber hinaus können noch weitere Sensoren 15 zur Detektion sich im Fahrzeugumfeld bewegender Objekte, der Ermittlung ihrer Position, Bewegungsrichtung und Geschwindigkeit vorgesehen sein. Wie bereits ausgeführt, kommen nach unterschiedlichen physikalischen Prinzipien arbeitende Sensoren, wie zum Beispiel Radar-, Lidar-, Ultraschall- und Bildabtastsensoren in Frage. Wie vorstehend ebenfalls ausgeführt, tasten die angesprochenen Sensoren die Fahrzeugumgebung in einem Zeitraster ab, dabei kann das Zeitraster durch eine den jeweiligen Sensoren eigene Sensorsteuerung oder durch die Auswerteeinheit 8 vorgegeben sein. Wesentlich ist nur, dass der jeweilige Sensor einen Strom aus Dateninkrementen erzeugt, wobei unter einem Dateninkrement hier ein datenmäßiges "Abbild" des durch den Sensor erfassten Bereiches der Fahrzeugumgebung zu einem Zeitpunkt X verstanden werden soll, dem im Datenstrom ein Dateninkrement folgt, das den durch den Sensor erfassten Bereich der Fahrzeugumgebung zu einem Zeitpunkt X+1 repräsentiert.

Die vorstehend angesprochenen Datenströme aller Sensoren 7.1 bis 7.4, 15 werden an die Auswerteeinheit 8 übergeben, die eine Bewegungsanalyseeinrichtung 41 beinhaltet. Die Bewegungsanalyseeinrichtung 41 identifiziert, durch Auswerten aufeinanderfolgender Dateninkremente, Veränderungen im datenmäßigen Abbild, das der jeweilige Sensor zeitsequentiell liefert, schließt beim Identifizieren solcher Bereiche auf ein bewegtes Objekt und ermittelt
- durch die Auswertung der augenblicklichen Position im Abbildungsbereich des jeweiligen Sensors, die augenblickliche Position des bewegten Objektes relativ zum Fahrzeug,
- durch die Auswertung der Positionsänderung im Abbildungsbereich des jeweiligen Sensors in zeitlich aufeinanderfolgenden datenmäßigen Abbildern, die Bewegungsrichtung des bewegten Objektes und
- durch Auswertung der streckenmäßigen Größe der Positionsveränderung relativ zum Zeitraster, die Geschwindigkeit des bewegten Objektes.

Entsprechend wird mit den Datenströmen aller Sensoren 7.1 bis 7.4, 15 verfahren, so dass alle bewegten Objekte im Umfeld des Fahrzeugs, ihre Position relativ zum Fahrzeug, ihre Bewegungsrichtung relativ zum Fahrzeug und ihre Geschwindigkeit entlang ihrer Bewegungsrichtung bekannt sind.

Die so gewonnenen Informationen zu bewegten Objekten im Fahrzeugumfeld lassen sich in unterschiedlicher Weise nutzen. Einerseits kann durch Auswerten bewegter Objekte hinsichtlich ihrer Geschwindigkeit, der Bewegungsrichtung relativ zum Fahrzeug und gegebenenfalls der Häufigkeit gleichartiger Bewegungen darauf geschlossen werden, wo der fließende Verkehr am Fahrzeug vorbei strömt. Andererseits lässt sich, wie nachfolgend noch näher erläutert, ermitteln, ob sich bewegte Objekte - evtl. in ihrer Sicht auf den fließenden Verkehr durch die Konturen des Fahrzeugs behindert - auf den fließenden Verkehr zu bewegen. Zur Klassifizierung der das Fahrzeug umgebenden Bereiche ist im Beispiel nach Fig. 3 eine Klassifizierungseinrichtung 45 vorgesehen. Diese wertet die Attribute bewegter Objekte, die durch die Bewegungsanalyseeinrichtung 41 ermittelt wurden, hinsichtlich ihrer Geschwindigkeit, der Bewegungsrichtung relativ zum Fahrzeug und gegebenenfalls der Häufigkeit gleichartiger Bewegungen aus. Dabei identifizieren höhere Geschwindigkeit der bewegten Objekte als Schrittgeschwindigkeit, immer gleiche Bewegungsrichtung der bewegten Objekte und häufiges Auftreten gleichartiger Bewegungen den Bereich mit dem fließenden Verkehr. Abweichend vom Beispiel nach Fig. 3, kann selbstverständlich auch die Positionsbestimmung mittels eines GPS-Systems in Verbindung mit einer elektronischen Landkarte Aufschluss darüber geben, wo, relativ zum Standort des Fahrzeugs, der fließende Verkehr das Fahrzeug passiert. Als weitere Möglichkeit, den Bereich mit dem fließenden Verkehr gegenüber der Analyseeinrichtung 8 manuell zu identifizieren, kann natürlich auch eine Eingabevorrichtung 46 vorgesehen sein, mit der der Fahrzeugführer die Lage des fließenden Verkehrs direkt in die Klassifizierungseinheit 45 eingeben kann. Der Vorteil bei dieser manuellen Eingabe ist, dass eine Festlegung sofort nach Eingabe verfügbar ist und eine eventuell notwendige länger andauernde "Verkehrsbeobachtung" durch die Bewegungsanalyseeinrichtung 41 zum

Zwecke der Festlegung entfällt, was zum Beispiel bei geringem Verkehrsaufkommen unumgänglich wäre.

Ist der Bereich mit dem fließenden Verkehr als erster Unterbereich 13 (Fig.1) festgelegt, ermittelt die Klassifizierungseinheit 45 den zweiten Unterbereich 14 und dritten Unterbereich 15 (jeweils Fig. 1) anhand des gespeicherten Grundrisses des Fahrzeugs und dessen Lage zum fließenden Verkehr (erster Unterbereich) nach der Vorschrift, dass der zweite Unterbereich 14 und der dritte Unterbereich 15 jeweils dem ersten Unterbereich 13 benachbart sind und dass zwischen dem ersten Unterbereich 13 und dem zweiten Unterbereich 14 bzw. zwischen dem ersten Unterbereich 13 und dem dritten Unterbereich 15 jeweils eine der vier Ecken des Fahrzeuggrundrisses liegt. Der Begriff Ecke ist dabei als der Punkt zu verstehen, an dem zwei Seiten des Fahrzeuggrundrisses aufeinander treffen. Nach Anwendung dieser Vorschrift sind die Unterbereiche im Fahrzeugumfeld definiert. Ihre Lage wird nun der Kollisionsanalyseeinrichtung 42 zur Verfügung gestellt, die, neben dieser Information, die von der Bewegungsanalyseeinheit 41 ermittelten und zur Verfügung gestellten Informationen, also die relative Lage bewegter Objekte zum Fahrzeug, deren Bewegungsrichtung zum Fahrzeug und deren Geschwindigkeit entlang ihrer jeweiligen Bewegungsrichtung, dazu verwendet, Kollisionsrisiken zu ermitteln.

Die Ermittlung von Kollisionsrisiken geht davon aus, dass solche nur zwischen bewegten Objekten aus dem ersten Unterbereich 13 (Fig. 1) mit bewegten Objekten aus dem zweiten und/ oder dritten Unterbereich 14, 15 (Fig. 1) bestehen. Zu einer Kollision kann es demnach nur kommen, wenn sich Bewegungsrichtungen der bewegten Objekte aus dem zweiten und/ oder dritten Unterbereich 14, 15 mit Bewegungsrichtungen von bewegten Objekten aus dem ersten Unterbereich 13 überschneiden. Dies stellt die Kollisionsanalyseeinrichtung 42 durch einen entsprechenden Vergleich fest, indem sie Position und Bewegungsrichtung der bewegten Objekte aus dem ersten und zweiten Unterbereich und dem ersten und dem dritten Unterbereich jeweils zueinander in Beziehung setzt. Wird eine Überschneidung der Bewegungsrichtungen festgestellt, so übergibt die Kollisionsanalyseeinrichtung 42 die Bewegungsattribute der entsprechenden bewegten Objekte an eine Simulationseinheit 43, die anhand der Position, Bewegungsrichtung und Geschwindigkeit der auf Kollisionskurs befindlichen bewegten Objekte im Wege einer Simulation ermittelt, ob es bei Variation der Augenblicksgeschwindigkeiten der bewegten Objekte zu einer Kollision kommt. Die Abweichung der Geschwindigkeiten bei der es in der Simulation zu einer Kollision kommt, von der Augenblicksgeschwindigkeiten der auf Kollisionskurs befindlichen bewegten Objekte, stellt dabei ein Äquivalent für die Kollisionswahrscheinlichkeit dar. Ist die Abweichung klein, ist die Kollisionswahrscheinlichkeit hoch. Die so ermittelte Kollisionswahrscheinlichkeit wird mit einem in einem Speicher 47 abgelegten Wert verglichen. Dabei kann der im Speicher 47 abgelegte Wert ein veränderlicher Wert sein, der verkehrssituationsbezogen dort eingespeichert wird oder es ist dort eine Mehrzahl von Werten abgelegt und es wird der jeweils der Verkehrssituation entsprechende Wert ausgewählt und zum Vergleich herangezogen. Wird der gespeicherte Wert überschritten, gibt die Simulationseinrichtung 43 einen Ansteuerbefehl an eine Ansteuereinrichtung 44, die ihrerseits eine Warneinrichtung 16.1 bis 16.5, 10, 18 ansteuert. Die Auswahl der anzusteuernden Warneinrichtung erfolgt dabei nach dem Kriterium der Nähe zu dem zu warnenden Objekt. Zu diesem Zweck setzt die Ansteuereinrichtung die Position der Warneinrichtungen 16.1 bis 16.5, 10, 18 am Fahrzeug zu der Position des zu warnenden bewegten Objektes zum Fahrzeug in Beziehung und wählt die nächstliegende Warneinrichtung aus.

Wie bereits oben ausgeführt, können die Warneinrichtungen optische und/oder akustische Signale oder auch Funksignale abgeben, hierzu wird auf die angesprochenen obigen Textstellen verwiesen.

Es ist abschließend nochmals zu betonen, dass alle vorstehend der Analyseeinheit zugeordneten Funktionsgruppen bevorzugt durch Softwareroutinen realisiert sind, die auf einer oder mehreren im Fahrzeug verfügbaren Recheneinheiten ausgeführt werden.

Das vorstehend in Verbindung mit einem Stadtbus bzw. einem Reisebus beschriebene Verfahren kann natürlich bei jeder Art von Fahrzeugen, die sich im öffentlichen Raum bewegen, eingesetzt werden. So insbesondere auch bei Lastkraftwagen, sogenannten Transportern und Personenkraftwagen.

### Bezugszeichenliste

- 1: Stadtbus
- 2.1, 2.2, 2.3, 2.4, 2.5, 2.6: bewegte Objekte/ Personen 1 bis 6
- 3: Straße
- 4: Haltebucht
- 5: weiterer Bus
- 6.1, 6.2, 6.3: bewegte Objekte/ Personenkraftwagen 1 bis 3
- 7.1: Frontsensor
- 7.2: rechter Seitensensor
- 7.3: linker Seitensensor
- 7.4: hinterer Seitensensor
- 8, 8': Auswerteeinheit
- 9: Richtungspfeile
- 10: Warnblinklicht
- 11: Funkverbindung
- 12: Empfangseinrichtung
- 13: erster Unterbereich
- 14: zweiter Unterbereich
- 15: dritter Unterbereich
- 16.1, 16.2, 16.3, 16.4, 16.5: Warneinrichtungen 1 bis 5
- 17: vierter Unterbereich
- 20: Reisebus
- 21.1: erstes Nutzfahrzeug
- 21.2: zweites Nutzfahrzeug
- 22.1: Frontkamera
- 22.2: rechte Seitenkamera
- 22.3: Heckkamera
- 22.4: linke Seitenkamera
- 23.1: zweiter Unterbereich
- 23.2: erster Unterbereich I
- 23.3: dritter Unterbereich
- 23.4: erster Unterbereich II
- 24.1, 24.2, 24.3, 24.4: bewegte Objekte/ Reisende 1 bis 4
- 25.1, 25.2: bewegte Objekte/ Kraftwagen 1 und 2
- 26: weitere Kraftwagen
- 27.1,: erste Warneinrichtung vorne links
- 27.2,: zweite Warneinrichtung vorne rechts
- 27.3,: dritte Warneinrichtung hinten rechts
- 27.4: vierte Warneinrichtung hinten links
- 28: erste Fahrstraße
- 29: zweite Fahrstraße
- 30: Parkstreifen
- 31: Parkbuchten
- 40: Sensoreinrichtung
- 41: Bewegungsanalyseeinrichtung
- 42: Kollisionsanalyseeinrichtung
- 43: Simulationseinheit
- 44: Ansteuereinrichtung
- 45: Klassifizierungseinheit
- 46: Eingabevorrichtung
- 47: Speicher

## Patentansprüche

1. Verfahren zur Warnung von Verkehrsteilnehmern, die ein stillstehendes Fahrzeug passieren, wobei das Fahrzeug wenigstens eine das Fahrzeugumfeld erfassende Sensoreinrichtung aufweist und die wenigstens eine Sensoreinrichtung zur Erfassung des Fahrzeugumfeldes zumindest einen Teilbereich des Verkehrsgeschehens im Fahrzeugaußenraum erfasst, wobei der erfasste Teilbereich seinerseits zumindest die dem fließenden Verkehr zugewandten Bereiche des Fahrzeugumfeldes als erste Unterbereiche (13, 23.2, 23.4), sowie die jeweils seitlich benachbarten dem fließenden Verkehr nicht zugewandten Bereiche als zweite und dritte Unterbereiche (14, 15, 23.1, 23.3) unterscheidbar abdeckt, die wenigstens eine das Fahrzeugumfeld erfassende Sensoreinrichtung (40) wenigstens einen Datenstrom generiert und an eine Auswerteeinheit (8, 8') übergibt, die Auswerteeinheit (8, 8') den Datenstrom auf bewegte Objekte (2.1 - 2.6, 6.1 - 6.3, 24.1 - 24.4, 25.1, 25.2) hin analysiert und dass bei Auftreten eines bewegten Objektes (6.1, 6.2, 25.1, 25.2) in den ersten Unterbereichen und dem gleichzeitigen Auftreten eines weiteren bewegten Objektes (2.3, 2.4, 2.5, 24.1, 24.2, 24.3, 24.4) in den zweiten und/oder dritten Unterbereichen (14, 15, 23.1, 23.3) die Auswerteeinheit (8, 8') eine Warneinrichtung (16.1, 16.2, 16.4, 16.5, 27.1 - 27.4) ansteuert, derart, dass diese ein akustisch und/oder optisch zumindest für Fußgänger oder Radfahrer als bewegtes Objekt (2.3, 2.4, 2.5, 24.1, 24.2, 24.3, 24.4) in den zweiten und/oder dritten Unterbereichen (14, 15, 23.1, 23.3) wahrnehmbares Warnsignal abgibt, **dadurch gekennzeichnet, dass** die Ansteuerung der Warneinrichtung (16.1, 16.2, 16.4, 16.5, 27.1 - 27.4) zur Abgabe eines Warnsignals durch die Auswerteeinheit (8, 8') nur dann erfolgt, wenn durch die Auswerteeinheit (8, 8') das wenigstens eine bewegte Objekt (6.1, 6.2, 25.1, 25.2) in den ersten Unterbereichen (13, 23.2 23.4) erkannt wurde und eine Bewegungsbestimmung durch die Auswerteeinheit (8, 8') ergibt, dass das wenigstens eine in den zweiten Unterbereichen (14, 23.1) und/oder dritten Unterbereichen (15, 23.3) durch die Auswerteeinheit (8, 8') erkannte bewegte Objekt (2.3, 2.4, 2.5, 24.1, 24.2, 24.3, 24.4) sich auf die ersten Unterbereiche (13, 23.2, 23.4) zu bewegt.

2. Verfahren nach Anspruch 1, **dadurch gekennzeichnet, dass** bei durch die Auswerteeinrichtung (8, 8') erkanntem Vorhandensein von wenigstens einem bewegten Objekt (6.1, 6.2, 25.1, 25.2) in den ersten Unterbereichen (13, 23.2 23.4) und dem Vorhandensein von wenigstens einem bewegten Objekt (2.3, 2.4, 2.5, 24.1, 24.2, 24.3, 24.4) in den zweiten Unterbereichen (14, 23.1) und/oder dritten Unterbereichen (15, 23.3), die Auswerteeinheit (8, 8') die Kollisionswahrscheinlichkeit zwischen dem wenigstens einen bewegten Objekt (6.1, 6.2, 25.1, 25.2) in den ersten Unterbereichen (13, 23.2, 23.4) und dem wenigstens einen Objekt (2.3, 2.4, 2.5, 24.1, 24.2, 24.3, 24.4) in den zweiten und/ oder dritten Unterbereichen (14, 23.1 und 15, 23.3) berechnet und wenigstens eine der Warneinrichtungen (16.1, 16.2, 16.4, 16.5, 27.1 bis 27.4) ansteuert, wenn wenigstens ein vorgegebener erster Schwellwert für die Kollisionswahrscheinlichkeit überschritten wird.

3. Verfahren nach Anspruch 2, **dadurch gekennzeichnet, dass**, zur Berechnung der Kollisionswahrscheinlichkeit durch die Auswerteeinheit (8, 8'), diese die Position, Bewegungsrichtung und Geschwindigkeit aller ermittelten bewegten Objekte (2.1 bis 2.6, 6.1 bis 6.3, 24.1 bis 24.4, 25.1, 25.2) ermittelt und die aktuelle Position, Bewegungsrichtung und Geschwindigkeit der bewegten Objekte (6.1, 6.2, 25.1, 25.2) in den ersten Unterbereichen (13, 23.2, 23.4) zu der jeweiligen aktuellen Position, Bewegungsrichtung und Geschwindigkeit aller bewegten Objekte (2.3, 2.4, 2.5, 24.1, 24.2, 24.3, 24.4) in den zweiten und dritten Unterbereichen (14, 23.1 und 15, 23.3) in Beziehung setzt.

4. Verfahren nach Anspruch 2 oder 3, **dadurch gekennzeichnet, dass** die Ansteuerung der Warneinrichtung (16.1, 16.2, 16.4, 16.5, 27.1 bis 27.4, 10, 18) mittels der Auswerteeinheit (8, 8') so erfolgt, dass das jeweilige Warnsignal, vorzugsweise akustisch und/oder optisch, eine ansteigende Intensität aufweist, wenn die Kollisionswahrscheinlichkeit nicht unter einen vorgegebenen zweiten Schwellwert fällt.

5. Verfahren nach einem der Ansprüche 2 bis 4, **dadurch gekennzeichnet, dass** der erste und/ oder der zweite Schwellwert in Abhängigkeit von der Position und/ oder Bewegungsrichtung und/ oder Geschwindigkeit der bewegten Objekte in den ersten und/ oder zweiten und/ oder dritten Unterbereichen festlegbar ist.

6. Verfahren nach Anspruch 4 oder 5, **dadurch gekennzeichnet, dass** der Intensitätsanstieg in Stufen erfolgt und/oder dass die Intensität der, vorzugsweise akustischen und/oder optischen, Warnung in Abhängigkeit von der Höhe der Kollisionswahrscheinlichkeit und/ oder von der Geschwindigkeit der bewegten Objekte (6.1, 6.2, 25.1, 25.2) im ersten Unterbereich (13, 23.2, 23.4) erfolgt.

7. Verfahren nach einem der vorhergehenden Ansprüche, **dadurch gekennzeichnet, dass** zusätzlich zur Ansteuerung der Warneinrichtung für die bewegten Objekte (2.3, 2.4, 2.5, 24.1, 24.2, 24.3, 24.4) in den zweiten und/ oder dritten Unterbereichen (14, 23.1 und 15, 23.3) die Auswerteeinheit (8, 8') eine zweite Warneinrichtung (16.3) für die bewegten Objekte (6.1, 6.2) in den ersten Unterbereichen (13) ansteuert, derart, dass die zweite Warneinrichtung (16.3) ein Warnsignal an die bewegten Objekte (6.1, 6.2) in den ersten Unterbereichen (13) abgibt.

8. Verfahren nach Anspruch 7, **dadurch gekennzeichnet, dass** die zweite Warneinrichtung (16.3) ein optisches und/ oder akustisches Signal an die bewegten Objekte (6.1,. 6.2) in den ersten Unterbereichen (13) abgibt.

9. Verfahren nach Anspruch 7 oder 8, **dadurch gekennzeichnet, dass** die zweite Warneinrichtung (16.3) ein Funksignal (11) an die bewegten Objekte (6.1, 6.2) in den ersten Unterbereichen (13) abgibt, wobei bevorzugt vorgesehen ist, dass das Funksignal (11) Informationen über Position, Richtung und Geschwindigkeit der bewegten Objekte (2.3, 2.4, 2.5,) in den zweiten und/ oder dritten Unterbereichen (14, 15) beinhaltet.

10. Verfahren nach einem der vorhergehenden Ansprüche, **dadurch gekennzeichnet, dass** die Auswerteeinheit (8, 8') so ausgebildet ist, dass sie die ersten Unterbereiche (13, 23.2, 23.4) mit dem fließenden Verkehr mittels einer Klassifizierungseinrichtung (45) selbständig ermittelt.

11. Verfahren nach Anspruch 10, **dadurch gekennzeichnet, dass** die Klassifizierungseinrichtung (45) zur Ermittlung der ersten Unterbereiche (13, 23.2, 23.4) eine oder mehrere der nachfolgenden Informationen zur Klassifizierung heranzieht
- die Positionsinformation eines GPS-Systems in Verbindung mit einer elektronischen Landkarte,
- die Geschwindigkeit und Bewegungsrichtung aller bewegten Objekte (2.1 bis 2.6, 6.1 bis 6.3, 24.1 bis 24.4, 25.1, 25.2) relativ zum Fahrzeug (1, 20),
- die Bewegungsbahn schnell bewegter Objekte (6.1, 6.2, 25.1, 25.2) relativ zum Fahrzeug (1, 20),
- die Abmessungen der bewegten Objekte in einem Unterbereich relativ zu den Abmessungen der bewegten Objekte in einem anderen Unterbereich.

12. Verfahren nach Anspruch 11, **dadurch gekennzeichnet, dass** die Klassifizierung der zweiten und dritten Unterbereiche (14, 15, 23.1, 23.3) in Abhängigkeit von den ersten Unterbereichen (13, 23.2, 23.4) durch die Auswerteeinheit (8, 8') so erfolgt, dass jeweils zwischen den ersten Unterbereichen (13, 23.2, 23.4) und den zweiten Unterbereichen, (14, 23.1) sowie den ersten Unterbereichen (13, 23.2, 23.4) und den dritten Unterbereichen (15, 23.3) eine der vier Ecken des Fahrzeuggrundrisses liegt.

13. Verfahren nach einem der vorhergehenden Ansprüche, **dadurch gekennzeichnet, dass** die Lage der ersten Unterbereiche (13, 23.2, 23.4) und/ oder der zweiten und dritten Unterbereiche (14, 23.1,15, 23.3) durch den Fahrzeugführer mittels Eingabemitteln in die Auswerteeinheit (8, 8') eingebbar ist.

14. Verfahren nach Anspruch 13, **dadurch gekennzeichnet, dass** nach Eingabe der Lage des ersten Unterbereichs oder der ersten Unterbereiche (13, 23.2, 23.4) durch den Fahrzeugführer der oder die zweiten Unterbereiche (14, 23.1) und der oder die dritten Unterbereiche (15, 23.3) benachbart zu dem oder den ersten Unterbereichen (13, 23.2, 23.4) durch die Auswerteeinheit (8, 8') bestimmt werden, derart, dass jeweils zwischen den ersten Unterbereichen (13, 23.2, 23.4) und den zweiten Unterbereichen (14, 23.1), sowie den ersten Unterbereichen (13, 23.2, 23.4) und den dritten Unterbereichen (15, 23.3), eine der vier Ecken des Fahrzeuggrundrisses liegen.

15. Anordnung zur Durchführung eines Verfahrens nach einem der vorhergehenden Ansprüche, wobei
- wenigstens eine Sensoreinrichtung (40) vorgesehen ist,
- die Sensoreinrichtung (40) wenigstens einen ersten, einen zweiten und einen dritten Unterbereich des Fahrzeugumfeldes erfasst,
- eine Auswerteeinheit (8, 8') vorgesehen ist, die relativ zum Fahrzeug (1, 20) bewegte Objekte (2.1 bis 2.6, 6.1 bis 6.3, 24.1 bis 24.4, 25.1, 25.2) im erfassten Fahrzeugumfeld ermittelt,
- die Sensoreinrichtung (40) so ausgebildet ist, dass sie das erfasste Fahrzeugumfeld in einem Zeitraster wiederholend erfasst und als aufeinanderfolgende Dateninkremente in einem Datenstrom an die Auswerteeinheit (8, 8') weiterleitet,
- die Auswerteeinheit (8, 8') aus den einzelnen das erfasste Fahrzeugumfeld zu aufeinanderfolgenden Zeitpunkten repräsentierenden Dateninkrementen bewegte Objekte (2.1 - 2.6, 6.1 - 6.3, 24.1 - 24.4, 25.1, 25.2), deren Position und gegebenenfalls deren Bewegungsrichtung und Geschwindigkeit relativ zueinander ermittelt und deren Kollisionswahrscheinlichkeit bestimmt,
- die Auswerteeinheit (8. 8') bei Überschreiten eines in einem Speicher (47) vorgehaltenen Schwellwertes für die Kollisionswahrscheinlichkeit ein Ansteuersignal an wenigstens eine Warneinrichtung (16.1, 16.2, 16.4, 16.5, 10, 18, 27.1 - 27.4) ausgibt,
- die wenigstens eine Warneinrichtung (16.1, 16.2, 16.4, 16.5, 10, 18, 27.1 - 27.4) so ausgebildet ist, dass diese ein akustisch und/oder optisch zumindest für bewegte Objekte (2.3, 2.4, 2.5, 24.1, 24.2, 24.4) in den zweiten und/ oder dritten Unterbereichen (14, 15, 23.1, 23.3) wahrnehmbares Warnsignal abgibt, und
- die Ansteuerung der Warneinrichtung (16.1, 16.2, 16.4, 16.5, 27.1 - 27.4) zur Abgabe eines Warnsignals durch die Auswerteeinheit (8, 8') nur dann erfolgt, wenn durch die Auswerteeinheit (8, 8') wenigstens ein bewegtes Objekt (6.1, 6.2, 25.1, 25.2) in den ersten Unterbereichen (13, 23,2, 23.4) erkannt wurde und eine Bewegungsbestimmung durch die Auswerteeinheit (8, 8') ergibt, dass wenigstens ein in den zweiten Unterbereichen (14, 23.1) und/oder dritten Unterbereichen (15, 23.3) durch die Auswerteeinheit (8, 8') erkanntes weiteres bewegtes Objekt (2.3, 2.4, 2.5, 24.1, 24.2, 24.3, 24.4) sich auf die ersten Unterbereiche (13, 23.2, 23.4) zu bewegt.

16. Anordnung nach Anspruch 15, **dadurch gekennzeichnet, dass** die Sensoreinrichtung (40) eine Kameraeinrichtung mit Rundumsichteigenschaft ist und/oder dass die Auswerteeinheit (8, 8') eine Bildanalyseeinrichtung beinhaltet und/oder dass die Warneinrichtung (16.1, 16.2, 16.4, 16.5, 10, 18, 27.1 - 27.4) eine am Fahrzeug (1, 20) ohnehin vorhandene Schall oder Licht abstrahlende Einrichtung ist.

17. Anordnung nach Anspruch 15 oder 16, **dadurch gekennzeichnet, dass** eine zweite von der Auswerteeinheit (8) ansteuerbare Warneinrichtung (16.3) vorgesehen ist, die wenigstens ein Warnsignal abgibt, das durch die Fahrzeugführer der bewegten Objekte (6.1, 6.2) in den ersten Unterbereichen (13) und/ oder durch die bewegten Objekte (6.1, 6.2) selbst erfassbar ist, wobei bevorzugt vorgesehen ist, dass die zweite Warneinrichtung (16.3) eine Fahrzeug-zu-Fahrzeug-Kommunikationseinrichtung ist.

18. Fahrzeug, insbesondere Nutzfahrzeug, in dem ein Verfahren nach einem der Ansprüche 1 bis 14 zur Anwendung kommt oder das eine Anordnung gemäß einem der Ansprüche 15 bis 17 umfasst.

## Claims

1. Method for warning road users passing a stationary vehicle, wherein the vehicle has at least one sensor device which senses the vehicle environment, and the at least one sensor device for sensing the vehicle environment senses at least one section of the traffic situation in the area outside the vehicle, wherein the sensed section in turn covers at least those areas of the vehicle environment which face the flowing traffic as first subareas (13, 23.2, 23.4) and the respective laterally adjacent areas which do not face the flowing traffic as second and third subareas (14, 15, 23.1, 23.3) in a distinguishable manner, the at least one sensor device (40) which senses the vehicle environment generates at least one data stream and transfers it to an evaluation unit (8, 8'), the evaluation unit (8, 8') analyses the data stream for moving objects (2.1-2.6, 6.1-6.3, 24.1-24.4, 25.1, 25.2), and, if a moving object (6.1, 6.2, 25.1, 25.2) appears in the first subareas and a further moving object (2.3, 2.4, 2.5, 24.1, 24.2, 24.3, 24.4) simultaneously appears in the second and/or third subareas (14, 15, 23.1, 23.3), the evaluation unit (8, 8') controls a warning device (16.1, 16.2, 16.4, 16.5, 27.1-27.4) in such a manner that it outputs a warning signal which can be acoustically and/or optically perceived at least by pedestrians or cyclists as a moving object (2.3, 2.4, 2.5, 24.1, 24.2, 24.3, 24.4) in the second and/or third subareas (14, 15, 23.1, 23.3), **characterized in that** the warning device (16.1, 16.2, 16.4, 16.5, 27.1-27.4) is controlled to output a warning signal by the evaluation unit (8, 8') only when the evaluation unit (8, 8') has detected the at least one moving object (6.1, 6.2, 25.1, 25.2) in the first subareas (13, 23.2, 23.4) and a movement determination by the evaluation unit (8, 8') reveals that the at least one moving object (2.3, 2.4, 2.5, 24.1, 24.2, 24.3, 24.4) detected by the evaluation unit (8, 8') in the second subareas (14, 23.1) and/or third subareas (15, 23.3) is moving towards the first subareas (13, 23.2, 23.4).

2. Method according to Claim 1, **characterized in that**, if the presence of at least one moving object (6.1, 6.2, 25.1, 25.2) in the first subareas (13, 23.2, 23.4) is detected by the evaluation device (8, 8') and if at least one moving object (2.3, 2.4, 2.5, 24.1, 24.2, 24.3, 24.4) is present in the second subareas (14, 23.1) and/or third subareas (15, 23.3), the evaluation unit (8, 8') calculates the probability of a collision between the at least one moving object (6.1, 6.2, 25.1, 25.2) in the first subareas (13, 23.2, 23.4) and the at least one object (2.3, 2.4, 2.5, 24.1, 24.2, 24.3, 24.4) in the second and/or third subareas (14, 23.1 and 15, 23.3) and controls at least one of the warning devices (16.1, 16.2, 16.4, 16.5, 27.1 to 27.4) if at least one predefined first threshold value for the probability of a collision is exceeded.

3. Method according to Claim 2, **characterized in that**, for the calculation of the probability of a collision by the evaluation unit (8, 8'), the latter determines the position, direction of movement and speed of all determined moving objects (2.1 to 2.6, 6.1 to 6.3, 24.1 to 24.4, 25.1, 25.2) and relates the current position, direction of movement and speed of the moving objects (6.1, 6.2, 25.1, 25.2) in the first subareas (13, 23.2, 23.4) to the respective current position, direction of movement and speed of all moving objects (2.3, 2.4, 2.5, 24.1, 24.2, 24.3, 24.4) in the second and third subareas (14, 23.1 and 15, 23.3).

4. Method according to Claim 2 or 3, **characterized in that** the warning device (16.1, 16.2, 16.4, 16.5, 27.1 to 27.4, 10, 18) is controlled by means of the evaluation unit (8, 8') in such a manner that the respective warning signal, preferably acoustic and/or optical, has an increasing intensity if the probability of a collision does not fall below a predefined second threshold value.

5. Method according to one of Claims 2 to 4, **characterized in that** the first and/or the second threshold value can be determined on the basis of the position and/or direction of movement and/or speed of the moving objects in the first and/or second and/or third subareas.

6. Method according to Claim 4 or 5, **characterized in that** the intensity is increased in stages, and/or **in that** the intensity of the preferably acoustic and/or optical warning is effected on the basis of the degree of probability of a collision and/or the speed of the moving objects (6.1, 6.2, 25.1, 25.2) in the first subarea (13, 23.2, 23.4).

7. Method according to one of the preceding claims, **characterized in that**, in addition to controlling the warning device for the moving objects (2.3, 2.4, 2.5, 24.1, 24.2, 24.3, 24.4) in the second and/or third subareas (14, 23.1 and 15, 23.3), the evaluation unit (8, 8') controls a second warning device (16.3) for the moving objects (6.1, 6.2) in the first subareas (13) in such a manner that the second warning device (16.3) outputs a warning signal to the moving objects (6.1, 6.2) in the first subareas (13).

8. Method according to Claim 7, **characterized in that** the second warning device (16.3) outputs an optical and/or acoustic signal to the moving objects (6.1, 6.2) in the first subareas (13).

9. Method according to Claim 7 or 8, **characterized in that** the second warning device (16.3) outputs a radio signal (11) to the moving objects (6.1, 6.2) in the first subareas (13), wherein provision is preferably made for the radio signal (11) to contain information relating to the position, direction and speed of the moving objects (2.3, 2.4, 2.5) in the second and/or third subareas (14, 15).

10. Method according to one of the preceding claims, **characterized in that** the evaluation unit (8, 8') is designed in such a manner that it independently determines the first subareas (13, 23.2, 23.4) with the flowing traffic by means of a classification device (45).

11. Method according to Claim 10, **characterized in that** the classification device (45) for determining the first subareas (13, 23.2, 23.4) uses one or more of the following items of information for classification
- the position information from a GPS system in conjunction with an electronic map,
- the speed and direction of movement of all moving objects (2.1 to 2.6, 6.1 to 6.3, 24.1 to 24.4, 25.1, 25.2) relative to the vehicle (1, 20),
- the trajectory of rapidly moving objects (6.1, 6.2, 25.1, 25.2) relative to the vehicle (1, 20),
- the dimensions of the moving objects in one subarea relative to the dimensions of the moving objects in another subarea.

12. Method according to Claim 11, **characterized in that** the second and third subareas (14, 15, 23.1, 23.3) are classified by the evaluation unit (8, 8') on the basis of the first subareas (13, 23.2, 23.4) in such a manner that one of the four corners of the vehicle outline respectively lies between the first subareas (13, 23.2, 23.4) and the second subareas (14, 23.1) and between the first subareas (13, 23.2, 23.4) and the third subareas (15, 23.3).

13. Method according to one of the preceding claims, **characterized in that** the location of the first subareas (13, 23.2, 23.4) and/or of the second and third subareas (14, 23.1, 15, 23.3) can be input to the evaluation unit (8, 8') by the vehicle driver using input means.

14. Method according to Claim 13, **characterized in that**, after the location of the first subarea(s) (13, 23.2, 23.4) has been input by the vehicle driver, the second subarea(s) (14, 23.1) and the third subarea(s) (15, 23.3) adjacent to the first subarea(s) (13, 23.2, 23.4) are determined by the evaluation unit (8, 8') in such a manner that one of the four corners of the vehicle outline respectively lies between the first subareas (13, 23.2, 23.4) and the second subareas (14, 23.1) and between the first subareas (13, 23.2, 23.4) and the third subareas (15, 23.3).

15. Arrangement for carrying out a method according to one of the preceding claims, wherein
- at least one sensor device (40) is provided,
- the sensor device (40) senses at least one first, one second and one third subarea of the vehicle environment,
- an evaluation unit (8, 8') is provided and determines objects (2.1 to 2.6, 6.1 to 6.3, 24.1 to 24.4, 25.1, 25.2) moving relative to the vehicle (1, 20) in the sensed vehicle environment,
- the sensor device (40) is designed in such a manner that it repeatedly senses the sensed vehicle environment in a time pattern and forwards it as successive data increments in a data stream to the evaluation unit (8, 8'),
- the evaluation unit (8, 8') determines moving objects (2.1-2.6, 6.1-6.3, 24.1-24.4, 25.1, 25.2), their position and possibly their direction of movement and speed relative to one another and their probability of a collision from the individual data increments representing the sensed vehicle environment at successive times,
- the evaluation unit (8, 8') outputs a control signal to at least one warning device (16.1, 16.2, 16.4, 16.5, 10, 18, 27.1-27.4) if a threshold value for the probability of a collision, which is held in a memory (47), is exceeded,
- the at least one warning device (16.1, 16.2, 16.4, 16.5, 10, 18, 27.1-27.4) is designed in such a manner that it outputs a warning signal which can be perceived acoustically and/or optically at least by moving objects (2.3, 2.4, 2.5, 24.1, 24.2, 24.4) in the second and/or third subareas (14, 15, 23.1, 23.3), and
- the warning device (16.1, 16.2, 16.4, 16.5, 27.1-27.4) is controlled to output a warning signal by the evaluation unit (8, 8') only when the evaluation unit (8, 8') has detected at least one moving object (6.1, 6.2, 25.1, 25.2) in the first subareas (13, 23.2, 23.4) and a movement determination by the evaluation unit (8, 8') reveals that at least one further moving object (2.3, 2.4, 2.5, 24.1, 24.2, 24.3, 24.4) detected by the evaluation unit (8, 8') in the second subareas (14, 23.1) and/or third subareas (15, 23.3) is moving towards the first subareas (13, 23.2, 23.4).

16. Arrangement according to Claim 15, **characterized in that** the sensor device (40) is a camera device having an all-round vision property, and/or **in that** the evaluation unit (8, 8') contains an image analysis device, and/or **in that** the warning device (16.1, 16.2, 16.4, 16.5, 10, 18, 27.1-27.4) is a device which is present on the vehicle (1, 20) anyway and emits sound or light.

17. Arrangement according to Claim 15 or 16, **characterized in that** a second warning device (16.3) which can be controlled by the evaluation unit (8) is provided and outputs at least one warning signal which can be sensed by the vehicle drivers of the moving objects (6.1, 6.2) in the first subareas (13) and/or by the moving objects (6.1, 6.2) themselves, wherein provision is preferably made for the second warning device (16.3) to be a vehicle-to-vehicle communication device.

18. Vehicle, in particular commercial vehicle, in which a method according to one of Claims 1 to 14 is used or which comprises an arrangement according to one of Claims 15 to 17.

## Revendications

1. Procédé destiné à avertir des usagers de la route qui passent à côté d'un véhicule à l'arrêt, le véhicule comportant au moins un système de capteurs balayant l'environnement du véhicule et l'au moins un système de capteurs destiné à balayer l'environnement du véhicule balayant au moins une zone partielle des événements du trafic dans l'espace extérieur au véhicule, la zone partielle balayée couvrant pour sa part distinctement au moins les zones faisant face au trafic fluide de l'environnement du véhicule en tant que premières sous-zones (13, 23.2, 23.4), ainsi que chacune des zones latéralement voisines, ne faisant pas face au trafic fluide en tant que deuxièmes et troisièmes sous-zones (14, 15, 23.1, 23.3), l'au moins un système de capteurs (40) qui balaye l'environnement du véhicule générant au moins un flux de données et les transmettant à une unité d'évaluation (8, 8'), l'unité d'évaluation (8, 8') évaluant le flux de données au niveau d'objets (2.1 à 2.6, 6.1 à 6.3, 24.1 à 24.4, 25.1, 25.2) déplacés et que à l'apparition d'un objet déplacé (6.1, 6.2, 25.1, 25.2) dans les premières sous-zones et l'apparition simultanée d'un objet (2.3, 2.4, 2.5, 24.1, 24.2, 24.3, 24.4) déplacé supplémentaire dans les deuxièmes et/ou troisièmes sous-zones (14, 15, 23.1, 23.3), l'unité d'évaluation (8, 8') actionnant un système d'avertissement (16.1, 16.2, 16.4, 16.5, 27.1 à 27.4), de telle sorte que cette dernière délivre un signal d'avertissement acoustique et/ou optique, perceptible au moins par des piétons ou des cyclistes en tant qu'objet (2.3, 2.4, 2.5, 24.1, 24.2, 24.3, 24.4) déplacé dans les deuxièmes et/ou troisièmes sous-zones (14, 15, 23.1, 23.3), **caractérisé en ce que** l'actionnement du système d'avertissement (16.1, 16.2, 16.4, 16.5, 27.1 à 27.4) pour la délivrance d'un signal d'avertissement n'est réalisé par l'unité d'évaluation (8, 8') que si l'unité d'évaluation (8, 8') a identifié l'au moins un objet (6.1, 6.2, 25.1, 25.2) déplacé dans les premières sous-zones (13, 23.2, 23.4) et s'il résulte d'une détermination du mouvement par l'unité d'évaluation (8, 8') que l'au moins un objet (2.3, 2.4, 2.5, 24.1, 24.2, 24.3, 24.4) déplacé que l'unité d'évaluation (8, 8') a identifié dans les deuxièmes sous-zones (14, 23.1) et/ou dans les troisièmes sous-zones (15, 23.3) se déplace en direction des premières sous-zones (13, 23.2, 23.4).

2. Procédé selon la revendication 1, **caractérisé en ce que** si le dispositif d'évaluation (8, 8') identifie la présence d'au moins un objet (6.1, 6.2, 25.1, 25.2) déplacé dans les premières sous-zones (13, 23.2, 23.4) et la présence d'au moins un objet (2.3, 2.4, 2.5, 24.1, 24.2, 24.3, 24.4) déplacé dans les deuxièmes (14, 23.1) sous-zones et/ou dans les troisièmes sous-zones (15, 23.3), l'unité d'évaluation (8, 8') calcule la probabilité de collision entre l'au moins un objet (6.1, 6.2, 25.1, 25.2) déplacé dans les premières sous-zones (13, 23.2, 23.4) et l'au moins un objet (2.3, 2.4, 2.5, 24.1, 24.2, 24.3, 24.4) dans les deuxièmes et/ou troisièmes sous-zones (14, 23.1 et 15, 23.3) et actionne au moins l'un des systèmes d'avertissement (16.1, 16.2, 16.4, 16.5, 27.1 à 27.4) si au moins une première valeur seuil prédéfinie pour la probabilité de collision est dépassée.

3. Procédé selon la revendication 2, **caractérisé en ce que** pour le calcul de la probabilité de collision par l'unité d'évaluation (8, 8'), celle-ci détermine la position, la direction de déplacement et la vitesse de tous les objets (2.1 à 2.6, 6.1 à 6.3, 24.1 à 24.4, 25.1, 25.2) en mouvement déterminés et met en rapport la position actuelle, la direction de déplacement et la vitesse des objets (6.1, 6.2, 25.1, 25.2) déplacés dans les premières sous-zones (13, 23.2, 23.4) avec la position actuelle, la direction de déplacement et la vitesse de tous les objets (2.3, 2.4, 2.5, 24.1, 24.2, 24.3, 24.4) déplacés dans les deuxièmes et troisièmes sous-zones (14, 23.1, et 15, 23.3).

4. Procédé selon la revendication 2 ou la revendication 3, **caractérisé en ce que** l'activation du système d'avertissement (16.1, 16.2, 16.4, 16.5, 27.1 à 27.4, 10,18) au moyen de l'unité d'évaluation (8, 8') s'effectue de la sorte que le signal d'avertissement respectif, de préférence acoustique et/ou optique fasse preuve d'une intensité croissante si la probabilité de collision ne chute pas sous une deuxième valeur seuil prédéfinie.

5. Procédé selon l'une quelconque des revendications 2 à 4, **caractérisé en ce que** la première et/ou la deuxième valeur seuil peut être fixée en fonction de la position et/ou de la direction de déplacement et/ou de la vitesse des objets déplacés dans les premières et/ou dans les deuxièmes et/ou dans les troisièmes sous-zones.

6. Procédé selon la revendication 4 ou la revendication 5, **caractérisé en ce que** la montée en intensité s'effectue par paliers et/ou **en ce que** l'intensité de l'avertissement de préférence acoustique et/ou optique dépend de la valeur de la probabilité de collision et/ou de la vitesse des objets (6.1, 6.2, 25.1, 25.2) déplacés dans la première sous-zone (13, 23.2, 23.4).

7. Procédé selon l'une quelconque des revendications précédentes, **caractérisé en ce qu'**en supplément de l'activation du système d'avertissement pour les objets (2.3, 2.4, 2.5, 24.1, 24.2, 24.3, 24.4) déplacés dans les deuxièmes et/ou dans les troisièmes sous-zones (14, 23.1 et 15, 23.3), l'unité d'évaluation (8, 8') actionne un deuxième système d'avertissement (16.3) pour les objets (6.1, 6.2) déplacés dans les premières sous-zones (13), de telle sorte que le deuxième système d'avertissement (16.3) délivre un signal d'avertissement aux objets (6.1, 6.2) déplacés dans les premières sous-zones (13).

8. Procédé selon la revendication 7, **caractérisé en ce que** le deuxième système d'avertissement (16.3) délivre un signal optique et/ou acoustique aux objets (6.1, 6.2) déplacés dans les premières sous-zones (13).

9. Procédé selon la revendication 7 ou la revendication 8, **caractérisé en ce que** le deuxième système d'avertissement (16.3) délivre un signal radio (11) aux objets (6.1, 6.2) déplacés dans les premières sous-zones (13), alors qu'il est prévu de préférence que le signal radio (11) contienne des informations sur la position, la direction et la vitesses des objets (2.3, 2.4, 2.5) déplacés dans les deuxièmes et/ou dans les troisièmes sous-zones (14,15).

10. Procédé selon l'une quelconque des revendications précédentes, **caractérisé en ce que** l'unité d'évaluation (8, 8') est conçue de sorte à déterminer de manière autonome les premières sous-zones (13, 23.2, 23.4) avec le trafic fluide au moyen d'un système de classification (45).

11. Procédé selon la revendication 10, **caractérisé en ce que** pour déterminer les premières sous-zones (13, 23.2, 23.4), le système de classification (45) a recours pour la classification à l'une ou à plusieurs des informations suivantes
- à l'information de position d'un système GPS en association avec la cartographie électronique,
- la vitesse et la direction de déplacement de tous les objets (2.1 à 2.6, 6.1 à 6.3, 24.1 à 24.4, 25.1, 25.2) par rapport au véhicule (1, 20),
- la trajectoire d'objets (6.1, 6.2, 25.1, 25.2) déplacés rapidement par rapport au véhicule (1, 20),
- les dimensions des objets déplacés dans une sous-zone par rapport aux dimensions des objets déplacés dans une autre sous-zone.

12. Procédé selon la revendication 11, **caractérisé en ce que** la classification des deuxièmes et des troisièmes sous-zones (14, 15, 23.1, 23.3) s'effectue par l'unité d'évaluation (8, 8') en fonction des premières sous-zones (13, 23.2, 23.4) de sorte que chaque fois entre les premières sous-zones (13, 23.2, 23.4) et les deuxièmes sous-zones (14, 23.1) ainsi qu'entre les premières sous-zones (13, 23.2, 23.4) et les troisièmes sous-zones (15, 23.3) se situe l'un des quatre angles du tracé du véhicule.

13. Procédé selon l'une quelconque des revendications précédentes, **caractérisé en ce que** la position des premières sous-zones (13, 23.2, 23.4) et/ou des deuxièmes et troisièmes sous-zones (14, 23.1, 15, 23.3) peut être saisie dans l'unité d'évaluation (8, 8') par le conducteur du véhicule à l'aide de moyens de saisie.

14. Procédé selon la revendication 13, **caractérisé en ce qu'**après la saisie de la position de la première sous-zone ou des premières sous-zones (13, 23.2, 23.4) par le conducteur du véhicule, la ou les deuxièmes sous-zones (14, 23.1) et la ou les troisièmes sous-zones (15, 23.3) au voisinage de l'une ou des premières sous-zones (13, 23.2, 23.4) sont déterminées par l'unité d'évaluation (8, 8'), de telle sorte que chaque fois entre les premières sous-zones (13, 23.2, 23.4) et les deuxièmes sous-zones (14, 23.1) ainsi que les premières sous-zones (13, 23.2, 23.4) et les troisièmes sous-zones (15, 23.3) se situe l'un des quatre angles du tracé du véhicule.

15. Agencement destiné à réaliser un procédé selon l'une quelconque des revendications précédentes
- au moins un système de capteurs (40) étant prévu,
- le système de capteurs (40) balayant au moins une première, une deuxième et une troisième sous-zones de l'environnement du véhicule,
- une unité d'évaluation (8, 8') étant prévue, qui détermine des objets (2.1 à 2.6, 6.1 à 6.3, 24.1 à 24.4, 25.1, 25.2) déplacés par rapport au véhicule (1, 20) dans l'environnement balayé du véhicule,
- le système de capteurs (40) étant conçu de sorte à balayer itérativement l'environnement balayé du véhicule dans une trame de temps et à le retransmette à l'unité d'évaluation (8, 8') en tant qu'incréments de données successifs dans un flux de données,
- à partir des incréments de données isolés représentant l'environnement balayé du véhicule à des moments successifs, l'unité d'évaluation (8, 8'), déterminant des objets (2.1 à 2.6, 6.1 à 6.3, 24.1 à 24.4, 25.1, 25.2) déplacés, leur position et le cas échéant leur direction de déplacement et leur vitesse mutuelle et déterminant leur probabilité de collision,
- lors du dépassement d'une valeur seuil pour la probabilité de collision sauvegardée dans une mémoire (47), l'unité d'évaluation (8, 8') délivrant un signal d'actionnement à au moins un système d'avertissement (16.1, 16.2, 16.4, 16.5, 10, 18, 27.1 à 27.4),
- l'au moins un système d'avertissement (16.1, 16.2, 16.4, 16.5, 10, 18, 27.1 à 27.4) étant conçu de sorte à délivrer un signal d'avertissement acoustique et/ou optique, perceptible au moins par des objets (2.3, 2.4, 2.5, 24.1, 24.2 24.4,) déplacés dans les deuxièmes et/ou dans les troisièmes sous-zones (14, 15, 23.1, 23.3),
- l'actionnement du système d'avertissement (16.1, 16.2, 16.4, 16.5, 27.1 à 27.4) par l'unité d'évaluation (8, 8') pour la délivrance d'un signal d'avertissement ne s'effectuant que si l'unité dévaluation (8, 8') a identifié au moins un objet (6.1, 6.2, 25.1, 25.2) déplacé dans les premières sous-zones (13, 23.2, 23.4) et que par l'unité d'évaluation (8, 8') il soit procédé à une détermination de mouvement de laquelle il résulte qu'au moins un objet (2.3, 2.4, 2.5, 24.1, 24.2, 24.3, 24.4) déplacé supplémentaire identifié par l'unité d'évaluation (8, 8') dans les deuxièmes sous-zones (14, 23.1) et/ou dans les troisièmes sous-zones (15, 23.3) se déplace en direction des premières sous-zones (13, 23.2, 23.4).

16. Agencement selon la revendication 15, **caractérisé en ce que** le système de capteurs (40) est un système de caméra avec propriété de vue panoramique et/ou **en ce que** l'unité d'évaluation (8, 8') contient un système d'analyse d'image et/ou **en ce que** le système d'avertissement (16.1, 16.2, 16.4, 16.5, 10, 18, 27.1 à 27.4) est un système d'ores et déjà présent sur le véhicule (1, 20) émettant du bruit ou de la lumière.

17. Agencement selon la revendication 15 ou la revendication 16, **caractérisé en ce qu'**il est prévu un deuxième système d'avertissement (16.3) actionnable par l'unité d'évaluation (8), qui délivre au moins un signal d'avertissement qui peut être détecté par les conducteurs de véhicules des objets (6.1, 6.2) déplacés dans les premières sous-zones (13) et/ou par les objets (6.1, 6.2) en mouvement mêmes, alors qu'il est prévu de préférence que le deuxième système d'avertissement (16.3) soit un système de communication de véhicule-à-véhicule.

18. Véhicule, notamment véhicule utilitaire dans lequel est utilisé un procédé selon l'une quelconque des revendications 1 à 14 ou qui comprend un agencement selon l'une quelconque des revendications 15 à 17.
